(19) Europäisches Patentamt
European Patent Office
Office européen des brevets

(11) **EP 2 624 014 A2**

(12) **EUROPEAN PATENT APPLICATION**

(43) Date of publication:
**07.08.2013 Bulletin 2013/32**

(51) Int Cl.:
*G01V 1/34* (2006.01)     *G01V 1/30* (2006.01)
*G06T 5/00* (2006.01)

(21) Application number: **13002386.4**

(22) Date of filing: **14.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.11.2007   US 987906 P**

(62) Document number(s) of the earlier application(s) in accordance with Art. 76 EPC:
**08849599.9 / 2 220 517**

(71) Applicant: **Terraspark Geosciences, LLC Wilmington, DE 19808 (US)**

(72) Inventor: **Hammon, III, William Stanley Boulder, CO 80302 (US)**

(74) Representative: **Von Rohr Patentanwälte Partnerschaft Rüttenscheider Straße 62 45130 Essen (DE)**

Remarks:
This application was filed on 04-05-2013 as a divisional application to the application mentioned under INID code 62.

(54)    **Seismic data processing**

(57)    A suite of processes and tools for preprocessing data prior to seismic interpretation including: voxel connectivity mapping, seismic response reduction, voxel suppression and voxel density. Voxel connectivity is used to assist with removing insignificant data. Seismic response reduction is used to reduce the seismic response of a given reflector to a lobe, such as a main lobe. Voxel suppression assists with highlighting and enhancing lithologic boundaries to aid in human and computer-aided interpretation. Voxel density scores the local significance of data trends within a volume, such as a 3-D seismic volume, to assist with the enhancement of these trends.

Fig. 1

EP 2 624 014 A2

## Description

This application claims the benefit of and priority under 35 U.S.C. § 119(e) to U.S. Patent Application No. 60/987,906, filed 14 November 2007, entitled "Seismic Data Processing," and is related to PCT Application PCT/US2007/071733 (Published as WO2008/005690), both of which are incorporated herein by reference in their entirety.

BACKGROUND

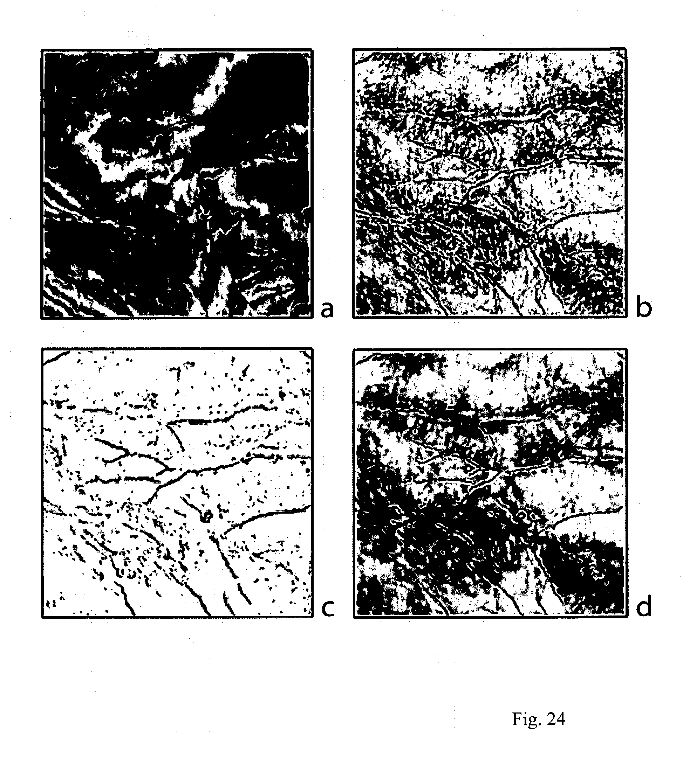

In the related application mentioned above, processes are described that assist with the identification of potential hydrocarbon deposits that include performing a structural interpretation of a three-dimensional seismic volume, transforming the three-dimensional seismic volume into a stratal-slice volume, performing a stratigraphic interpretation of the stratal-slice volume which includes the extracting of bounding surfaces and faults and transforming the stratal-slice volume into the spatial domain. As illustrated, an exemplary seismic volume before domain transformation is presented in Fig. 24a of the related application, interpreted horizons and faults used in the transformation are presented in Fig. 24b of the related application and the domain transformed stratal-slice volume is presented in Fig. 24c of the related application. The input seismic volume in Fig. 24a of the related application has deformations associated with syn- and post-depositional faulting. The output domain transformed volume (Fig. 24c of the related application) is substantially free of deformations.

This workflow and automated or semi-automated method and system for identifying and interpreting depositional environments, depositional systems and elements of depositional systems from 3-D seismic volumes benefits from data pre-processing.

SUMMARY

It is an aspect of the present invention to provide systems, methods and techniques for data processing.

It is another aspect of this invention to provide systems, methods and techniques for seismic data pre-processing.

It is a further aspect of this invention to provide systems, methods and techniques for 3-D seismic data pre-processing.

A further aspect of this invention is directed toward determining a voxel connectivity score.

A still further aspect of this invention relates to reducing data "clutter" based on the voxel connectivity score.

Still other exemplary aspects of the invention relate to reducing a seismic response of a reflector to a lobe.

Still other exemplary aspects of the invention relate to reducing a seismic response of a reflector to a main lobe.

Another exemplary aspect of the invention is directed toward removing extraneous reflections in seismic data.

Further exemplary aspects of the invention relate to highlighting and enhancing lithologic boundaries to assist with interpretation of seismic data.

Additional aspects of the invention relate to scoring and utilizing confidence in a 3-D data volume.

Still further aspects of the invention relate to using local data redundancy to generate and output a stable estimate of confidence in a data set.

These and other features and advantages of this invention are described in, or are apparent from, the following detailed description of the exemplary embodiments.

BRIEF DESCRIPTION OF THE DRAWINGS

The exemplary embodiments of the invention will be described in detail, with reference to the following figures. It should be understood that the drawings are not necessarily shown to scale. In certain instances, details which are not necessary for an understanding of the invention or which render other details difficult to perceive may have been omitted. It should be understood, of course, that the invention is not necessarily limited to the particular embodiments illustrated herein.

Figure 1 illustrates an exemplary data processing system and seismic interpretation system according to this invention;

Figure 2 illustrates an exemplary method for determining voxel connectivity according to this invention;

Figure 3 illustrates an exemplary method for reducing reflections according to this invention;

Figure 4 illustrates an exemplary method of highlighting high amplitude events in a data volume, such as a seismic volume;

Figure 5 illustrates an exemplary voxel density estimation process;

Figures 6 (a-f) illustrate an exemplary application of voxel connectivity with progressively higher connectivity score thresholds to seismic data: a - input "sparse" seismic section; b - f - input seismic data filtered by voxel connectivity with connectivity scores progressively increasing from 100 in b to 20,000 in f;

Figures 7 (a-c) illustrate an exemplary application of voxel connectivity with progressively higher connectivity score thresholds to seismic data: a - input "sparse" seismic section; b - c - input seismic data filtered by Voxel Connectivity with progressively increasing connectivity scores;

Figures 8 (a-c) illustrate an exemplary application of voxel connectivity with progressively higher connectivity score thresholds to a different vertical seismic section from the same seismic data volume used in Figure 2: a - input "sparse" seismic section; b - c - input seismic data filtered by Voxel Connectivity with progressively increasing connectivity scores;

Figure 9 illustrates an exemplary a "zero phase" wavelet centered on a reflector - note the train of low amplitude side-lobes above and below the main lobe;

Figures 10 (a-d) illustrate an exemplary seismic section processed using reflection collapser: a - input data; b - reflection collapser processed section; c - reflection collapser processed section for peaks only; d - reflection collapser processed section for troughs only;

Figures 11 (a-d) illustrate an exemplary reflection collapser applied to a sparse input data set: a - input data; b - reflection collapser processed section; c - reflection collapser processed section for peaks only; d - reflection collapser processed section for troughs only;

Figure 12 illustrates an example of cosine taper scaling factors for a two dimensional rectangular operator of dimensions 5 x 9;

Figures 13 (a-b) illustrate an example of voxel suppression applied to an example seismic volume: a - a section from the input seismic volume; b - the same section from the volume filtered with Voxel Suppression;

Figures 14 (a-b) illustrate an example of voxel suppression applied to the same example seismic volume as in Figure 13: a - a section from the input seismic volume; b - the same section from the volume filtered with voxel suppression, this section is orthogonal to the section displayed in Figure 13;

Figures 15 (a-b) illustrate an example of voxel suppression applied to an second example seismic volume: a - a section from the input seismic volume; b - the same section from the volume filtered with voxel suppression;

Figures 16 (a-c) illustrate an example of the numerical results of voxel density calculations on a 10x10 data array: a - the input two-dimensional array of data; b - the output two dimensional array of data processed using a 3x3 voxel density operator accepting all input values greater than or equal to 6; c - the results of further constraining the output density score to be greater than or equal to 4;

Figures 17 (a-b) illustrate an example of the numerical results of voxel density calculations on a 10x10 data array from Figure 16a: a - the output two dimensional array of data processed as in Figure 16b with the additional constraint that the center voxel fall in the specified threshold range; b - the results of applying a minimum threshold of 4 to the density scores in Figure 17a;

Figures 18 (a-d) illustrate an example of a graphical representation of the results described in Figures 16 and 17: a - the same raw data as Figure 16a; b - the results shown in Figure 16c; c - the results shown in Figure 17b; d - the result of a simple thresholding operation applied to the input data where no density calculation was performed;

Figures 19 (a-f) illustrate en exemplary comparison of some standard data smoothing operators with density guided smoothing: a, b - the results of applying a 3x3 mean and median filters, respectively, to the raw data in Figure 18a; c - the result of applying the mean smoothing only to voxels that fail the minimum density test; d - the result of applying a median operator only to voxels that fail the minimum density test; e, f - the result of modifying the selective smoothing to only include voxels that fall outside the initial specified threshold range;

Figures 20 (a-d) illustrate various exemplary described filters applied to a horizontal slice through a continuity or coherence volume showing a canyon: a - input data; b - removing voxels that have a density score lower than a specified cutoff; c - the results of applying confidence-adaptive smoothing where voxels that failed the minimum density test and were outside the valid threshold range were included in smoothing; d - the result of applying contrast enhancement the data in a;

Figure 21 illustrates various exemplary described filters applied to a flat slice through a stratal volume showing a fluvial channel: a - input data; b - the curvature response of the data in a; c - the result of applying density threshold filtering to the curvature data in b; d - the result of applying contrast enhancement to the curvature data in b;

Figures 22 (a-b) illustrate exemplary numerical and graphical results of applying contrast enhancement to the sample data array from Figure 16a: a - numerical output array from contrast enhancement with the histogram of the input raw data from Figure 16a; b - graphical output array from contrast enhancement with the histogram of the output contrast enhanced data;

Figures 23 (a-e) illustrate an exemplary effect of locally adaptive voxel density-controlled smoothing and contrast enhancement on a time slice from a Gulf of Mexico data set: a - the raw seismic data that with a 3x3 median filter applied to reduce random noise; b - the result of calculating coherence on the data in a; c - the result of calculating the variance of the data in b; d,e - the result of applying locally adaptive contrast enhancement (d) and smoothing (e), controlled by the variance distribution in c, to the data in b;

Figures 24 (a-d) illustrate an exemplary effect of locally adaptive voxel density-controlled smoothing and contrast enhancement on a deeper time slice from the Gulf of Mexico data set used in Figure 23: a - the raw seismic data that with a 3x3 median filter applied to reduce random noise; b - the result of calculating coherence on the data in a; c,d - the result of applying locally adaptive contrast enhancement (c) and smoothing (d), to the data in b;

Figures 25 (a-f) illustrate exemplary effects of applying contrast enhancement to coherence data on the output of a fault enhance calculation: a - a coherence time slice showing a portion of a salt body, with surrounding faults; b, c - the result of applying two levels of contrast enhancement to the data in a; d - the fault enhanced output using the raw coherence data (a) as input; e - the fault enhanced output using the contrast enhanced data from (b) as input; f - the fault enhanced output using the contrast enhanced data (c) as input;

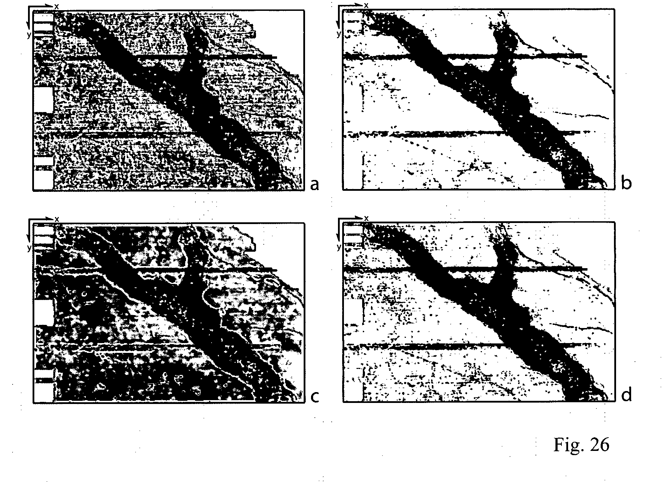

Figures 26 (a-d) illustrate an example of voxel density applied to coherence. Panel (a) contains a coherence image of a submarine canyon. Panel (b) shows the result of applying binary voxel density filtering to the data in Panel (a). Voxels that fail the minimum density threshold test are assigned a null value. Panel (c) show the result of voxel density controlled smoothing. voxel density score are used to alter the data contrast in Panel (d). Voxel Density-controlled smoothing and contrast enhancement preserve the original context of the data, rather than simply removing voxels that fail the density threshold test;

Figures 27 (a-b) illustrate an example of a voxel suppression result. Panel (a) contains a raw amplitude section. The top and bottom of the horizontal tabular salt body are indicated by the arrows in panel (a). Panel (b) shows the result of applying voxel suppression to the data in panel (a);

Figures 28 (a-d) illustrate an example of the reflection collapser applied to sparse seismic data;

Figures 29 (a-c) illustrate exemplary results of applying voxel connectivity; and

Figures 30 (a-d) illustrate an example of the workflow applied to real data.

## DETAILED DESCRIPTION

The exemplary embodiments of this invention will be described in relation to processing and interpretation of data, and in particular seismic data. However, it should be appreciated, that in general, the systems and methods of this invention will work equally well for any type of data representing any environment, object or article.

The exemplary systems and methods of this invention will also be described in relation to seismic data interpretation and manipulation. However, to avoid unnecessarily obscuring the present invention, the following description omits well-known structures and devices that may be shown in block diagram form or otherwise summarized.

For purposes of explanation, numerous details are set forth in order to provide a thorough understanding of the present invention. However, it should be appreciated that the present invention may be practiced in a variety of ways beyond the specific details set forth herein.

Furthermore, while the exemplary embodiments illustrated herein show the various components of the system collocated, it is to be appreciated that the various components of the system can be located at distant portions of a distributed network, such as a communications network and/or the Internet, or within a dedicated secure, unsecured and/or encrypted system. Thus, it should be appreciated that the components of the system can be combined into one or more devices or collocated on a particular node of a distributed network, such as a communications network. As will be appreciated from the following description, and for reasons of computational efficiency, the components of the system can be arranged at any location within a distributed network without affecting the operation of the system.

Furthermore, it should be appreciated that various links can be used to connect the elements and can be wired or wireless links, or any combination thereof, or any other known or later developed element(s) that is capable of supplying and/or communicating data to and from the connected elements. The term module as used herein can refer to any known or later developed hardware, software, firmware, or combination thereof that is capable of performing the functionality associated with that element. The terms determine, calculate and compute, and variations thereof, as used herein are used interchangeably and include any type of methodology, process, mathematical operation or technique, including those performed by a system, such as a processor, an expert system or neural network.

Additionally, all references identified herein are incorporated herein by reference in their entirely.

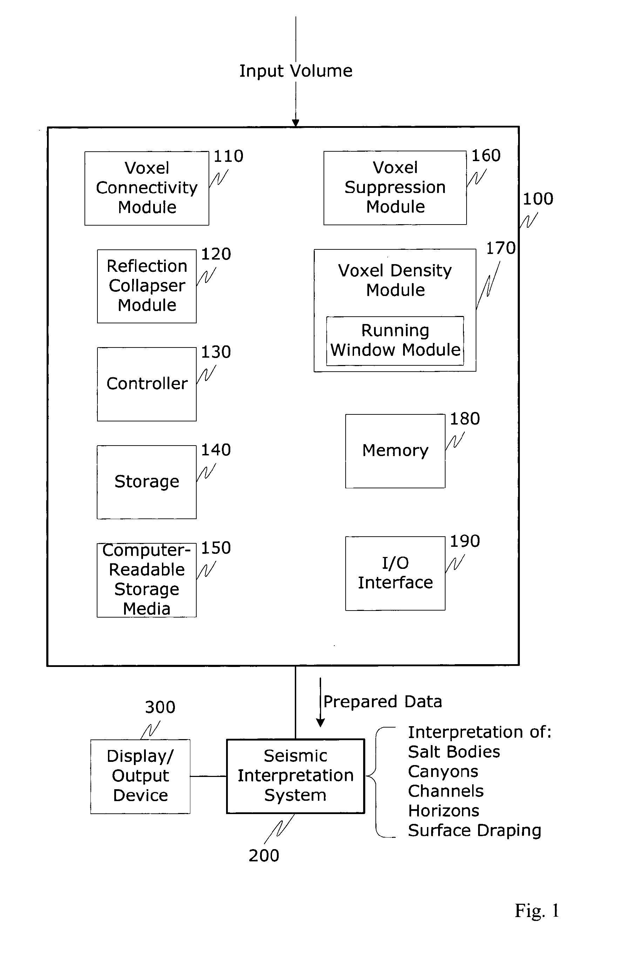

Figure 1 illustrates an exemplary data processing system 100 connected via a link to a seismic interpretation system 200. The seismic interpretation system 200 can assist with the interpretation of one or more of salt bodies, canyons, channels, horizons, surface draping, or the like, as described in the above-identified related application. The data processing system 100 comprises a voxel connectivity module 110, a reflection collapse module 120, a controller 130, storage 140, one or more computer-readable storage media 150 (on which software embodying the techniques disclosed herein can be stored and executed with the cooperation of the controller, memory, I/O interface and storage), voxel suppression module 160, voxel density module 170, memory 180 and I/O interface 190, all connected by link(s) (not shown). The system can further be associated with an output device, such as computer display 300, on which the outputs of the various techniques can be shown to a user.

The voxel connectivity module 110 assists with the mapping of connected voxels. Seismic data volumes can be rendered sparse by data processing steps designed to remove insignificant data points. Similarly, some seismic attributes result in large areas of null or undefined data. In both these cases, the null and undefined areas are commonly speckled with insignificant data that 'leak' through the processing step used to create the volume. This visual clutter can complicate the use of such volumes for segmentation or user or computer-interpretation of important features present in the volume. The removal of some or all of this visual clutter is one exemplary goal for increasing the utility of these data volumes.

An exemplary embodiment of the operation of the voxel connectivity mapping module 110 determines which voxels are constituent members of connected features in the data volume. The 'connectivity score' (how many voxels make up the feature) can then be used to remove what are identified as small, and thus insignificant, features through instituting a minimum feature size threshold for the output volume.

An exemplary embodiment of voxel connectivity maps out all connected non-null voxels in a volume. After mapping connected voxels, the connectivity score of each connected feature in the volume is defined as its number of constituent voxels. Visual clutter can then be filtered by removing features from the output data volume that have a connectivity score lower than some minimum threshold. In this manner, small features are removed from the data volume which can then be output and saved.

If voxel connectivity is applied to a sparse amplitude volume, amplitude polarity can be used as an additional optional constraint for connectivity mapping. For example, if mapping out a positive amplitude reflection, only positive amplitudes are considered to be non-null.

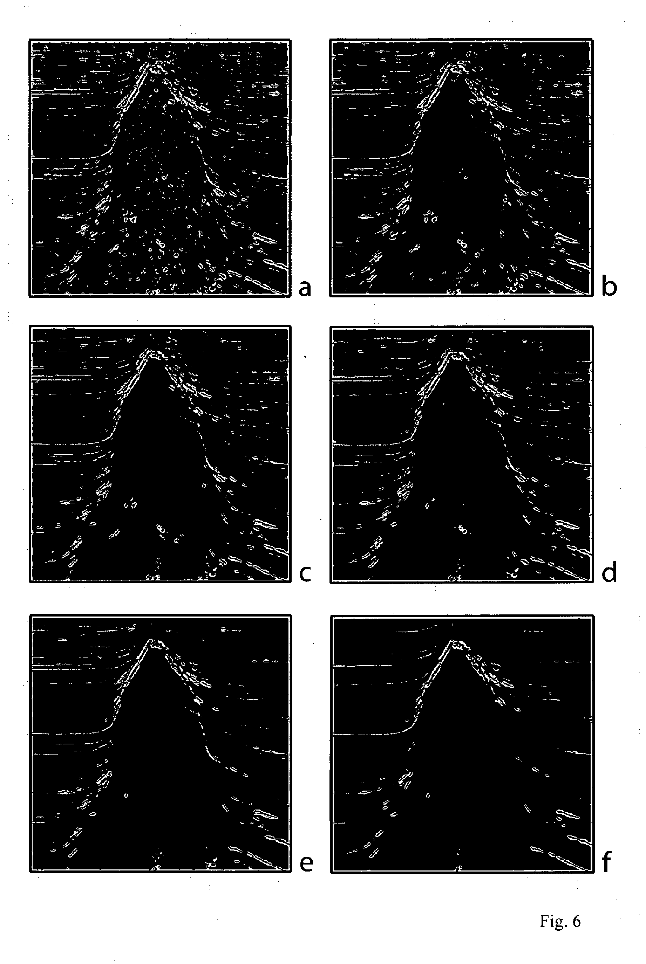

Figure 6 demonstrates the application of progressively higher connectivity score thresholds to the same data set. Figure 6a contains the raw seismic data rendered sparse by a separate process (e.g., Voxel Suppression). A salt diapir exists in the center of the data set. The significant amplitude events have been maintained while removing low amplitude reflections. However, a considerable amount of scattered, disconnected data points remain in the data set. Figure 6b shows the results of removing features that consist of fewer than 100 connected voxels. This result represents a significant improvement in reducing the amount of visual clutter. Figures 6c, 6d, 6e, and 6f filter out features using a progressively higher connectivity score threshold. Figure 6f is overly aggressive (using a connectivity score threshold of 20000) and has removed portions of the salt boundary reflection.

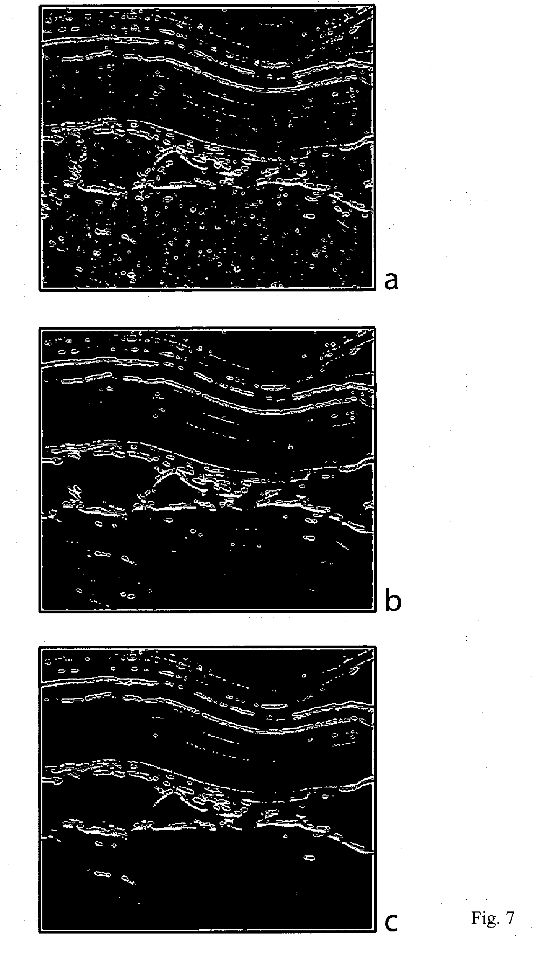

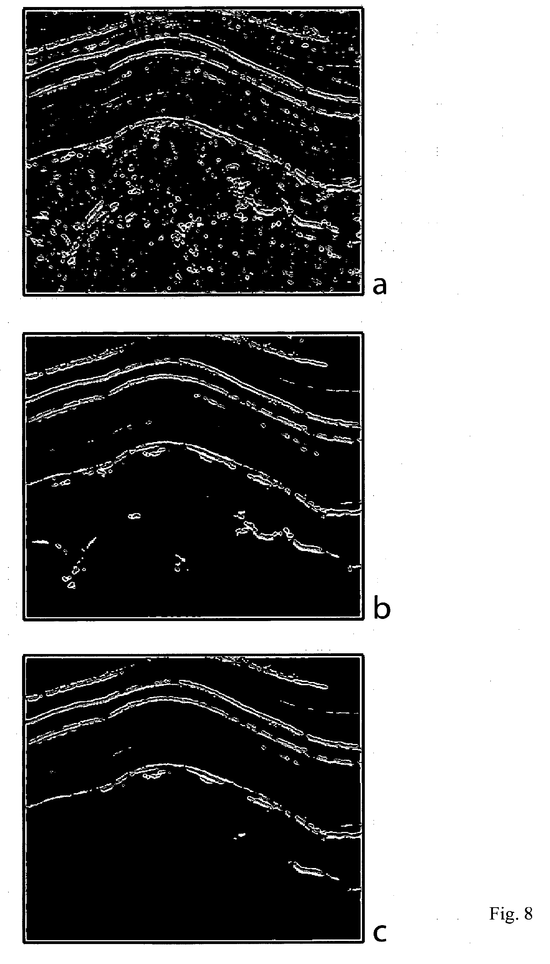

Figures 7 and 8 contain different cross-section views from the same data set. In each Figure, panel (a) shows raw data made sparse by the same pre-process described above. Panels (b) & (c) show a minimally filtered version of the data, and a more aggressively filtered result, respectively. In Figures 7b and 7c, significant reflections have been preserved while visual clutter has been reduced. The exemplary results were generated using a connectivity score threshold of 200. Similarly, Figure 7c maintains significant reflections while more aggressively filtering with a connectivity score threshold of 800. However, the same threshold has filtered too much in Figure 8c. The more discontinuous, but still significant, reflections at the base of the data section have been removed. thus, care should be taken in selecting the connectivity score threshold used for filtering.

The output volume from the voxel connectivity module 110 allows the user to remove unwanted visual clutter from a sparse data set. Connected bodies are scored based on the number of constituent voxels. Features with a connectivity score lower than a user-specified threshold are then removed from the output data volume. This technique can be a powerful tool for preparing data sets for seismic interpretation such as segmentation.

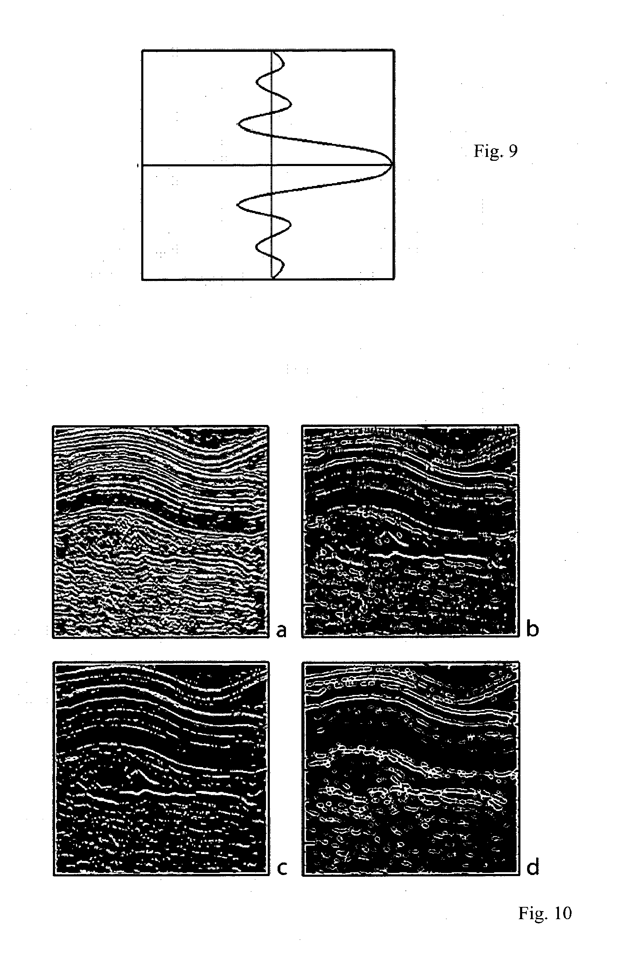

Seismic reflections consist of a main amplitude response, and several more minor flanking amplitude responses. These additional responses, other than the main response, complicate the use of amplitude volumes for computer segmentation of significant reflectors. In most processed seismic data volumes, a zero phase wavelet as illustrated in Fig. 9 is used. This means that the actual reflector location is indicated by the location of the maximum value of the main reflection response (or lobe). A zero phase wavelet is also symmetric about the maximum reflection lobe. There exist other extraneous lobes both above and below the main lobe of interest. Removing these extra reflection lobes can result in a much cleaner volume for both human and computer interpretation of high amplitude events.

An exemplary embodiment of the operation of the reflection collapser module 120 reduces the seismic response of a given reflector to a main lobe. This removes 'clutter' that may be unnecessary for the interpretation of high amplitude reflections in the seismic volume. Computer interpretation processes and algorithms are also aided by removing extraneous reflections from a seismic data volume.

In its most basic exemplary form, the reflection collapser module 120, for example in cooperation with the controller 130, convolves a 1-D operator with the input volume. For each operator position, a test is run to see if the operator's center voxel has the highest absolute amplitude of all the voxels contained within the operator. If the highest absolute amplitude voxel is not in the center of the operator, nothing is done and the operator moves to the next voxel. However, if the highest absolute amplitude is at the center of the operator, the module writes that voxel value to the output volume in its original position. Two searches are then performed to determine the extent of this reflection lobe.

The first search is performed upward from the center voxel. The search extends upward until a zero-crossing is encountered. The search then ceases. The second search is performed in a similar manner in the downward direction.

In this manner, the full extent of the main reflection lobe is written to the output volume by the module.

Other steps are also performed in order to ensure stability of the module's performance. Local variations in amplitude, as well as random noise, can cause a reflection side lobe to locally have a greater absolute amplitude than the main reflection lobe. In order to prevent this from introducing discontinuities to the main reflection lobe, a pre-processing step can be performed to regularize the amplitude of all reflection lobes present.

In this exemplary pre-processing step, all member voxels of each reflection lobe are mapped using connected polarity analysis. Connected polarity analysis is similar to connected threshold analysis in that it determines which voxels are connected in a 3-D body. The difference lies in the fact that the polarity of the voxel is the only parameter used to determine connectivity, rather than the use of a threshold range. Once all member voxels of a reflection lobe are mapped, the mean amplitude of that lobe is calculated. This mean is the amplitude value used to determine which lobe in a reflection is the main reflection lobe. The main process described above is then used to remove the side lobes of the reflection.

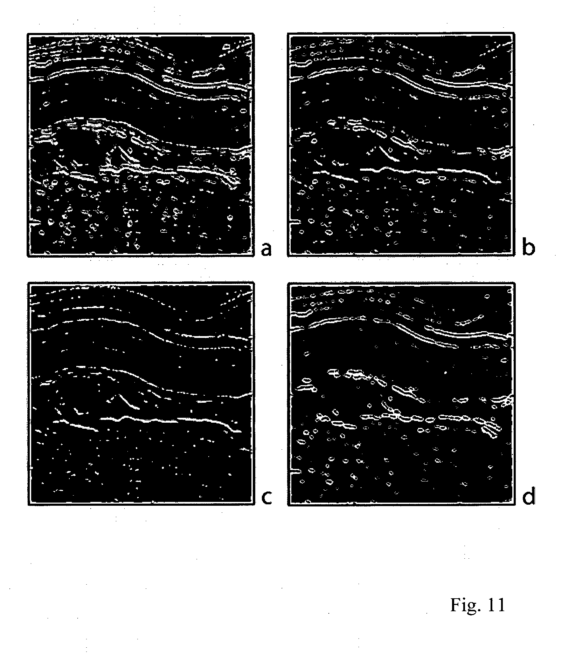

Figures 10 and 11 illustrate the application of reflection collapser module on an input seismic data volume. These views are a vertical cross-section through the data set. There is a horizontal band of salt in the middle of the data section.

Figure 10a contains the raw data for this section. Both high amplitude and low amplitude reflections are present. Figure 10b shows the result after applying the reflection collapser module process. The side lobes of reflection have been removed from the data. However, some local variations in reflection amplitude have caused inconsistent behavior for which a reflection lobe is preserved as the main lobe. Figures 10c and 10d, respectively, illustrate the result of only considering positive or negative amplitudes in the reflection collapser process. This could be desirable, for example, when trying to enhance an interface with a known reflection coefficient polarity (such as a sediment/salt interface).

Figure 11a shows a sparse version of the data in Figure 10a. The data was made sparse by a separate process designed to remove low amplitude reflections from the data set. Figure 11b shows the performance of the reflection collapser technique when considering all reflections in this sparse data set. Figures 11c and 11d illustrate the results of selectively considering only positive or negative amplitudes, respectively. Reflection side lobes are successfully removed in each data example, but the result can be more stable when only one polarity is considered.

The exemplary reflection collapsor module 120 removes one or more side lobes (either above and/or below a main lobe) from reflectors in a seismic data volume. This removes unnecessary clutter from a volume being used to interpret high amplitude reflections. Human interpretation and computer segmentation of these high-amplitude reflections can benefit from these data processing techniques. The expression of lithologic boundaries in a seismic data volume can be quite complicated. In the case of salt or diagenetic boundaries, they can cut through the data set in any imaginable orientation and configuration. The manual interpretation of such interfaces can be extremely time consuming when performed by hand. The automation of this type of interpretation is a very important research goal in seismic data interpretation. Voxel suppression is a first step towards highlighting and enhancing the lithologic boundaries to aid their human and computer-automated interpretation.

An exemplary embodiment of voxel suppression is a method to emphasize high amplitude events in a seismic volume. This is accomplished by the voxel suppression module 160 rendering a volume sparse, while maintain locally high amplitude events in their original positions. Preserved voxel values can optionally be rescaled in order to boost the strength of weak events. This rescaling normalizes the expression of significant reflections throughout the volume.

The exemplary voxel suppression module 160 convolves a 3-dimensional operator with the input seismic data volume. For each operator position, all voxels within the operator are sorted by absolute value. A user-specified (entered via a user input device (not shown)) percent of the highest values are preserved in their original position. This percent of preservation is typically small; less than 15% for all applications.

If the user prefers, these preserved values can be rescaled by the voxel suppression module 160 to regularize the expression of locally significant reflections throughout the volume. This is accomplished by calculating the standard deviation of all the voxels contained within the operator, and rescaling these values to make the local standard deviation match the standard deviation of the whole volume. To accomplish this, the all preserved voxels are multiplied by a rescaling factor (RF). The RF is calculated as:

$$RF = \text{Whole volume Std. Dev./Operator Std. Dev.}$$

In some cases voxel values are boosted, while in other cases they may be lowered. The end result is that all features preserved within the volume have a similar appearance.

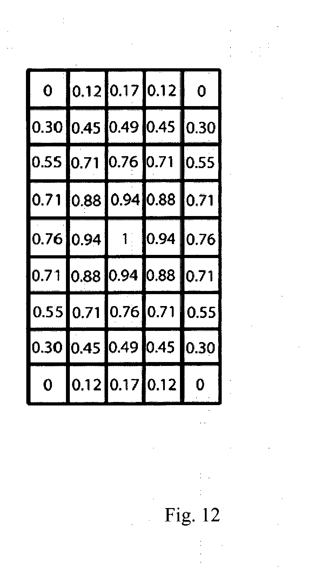

The data can also be rescaled by the voxel suppression module 160 to give emphasis to voxels in the center of the operator. A radial cosine taper can be used to give more emphasis to preserve voxels in the center of the operator, rather than at its edges. This cosine taper rescales voxels based on their distance from the center of the operator. The center voxel is rescaled by a factor of 1 (no change). The most distal voxels are rescaled by a factor of zero (zeroed out). In between, a sinusoidal taper can define the rescale factor for each individual voxel contained within the operator. Figure 12 is a 2-dimensional example of the cosine taper rescaling factors for a rectangular operator of dimensions 5x9. This exemplary combination of steps can enhance locally high-amplitude reflections, while removing extraneous surrounding voxels. The result is a visually cleaner volume that is more easily enhanced by other attributes for the purpose of automating interpretation.

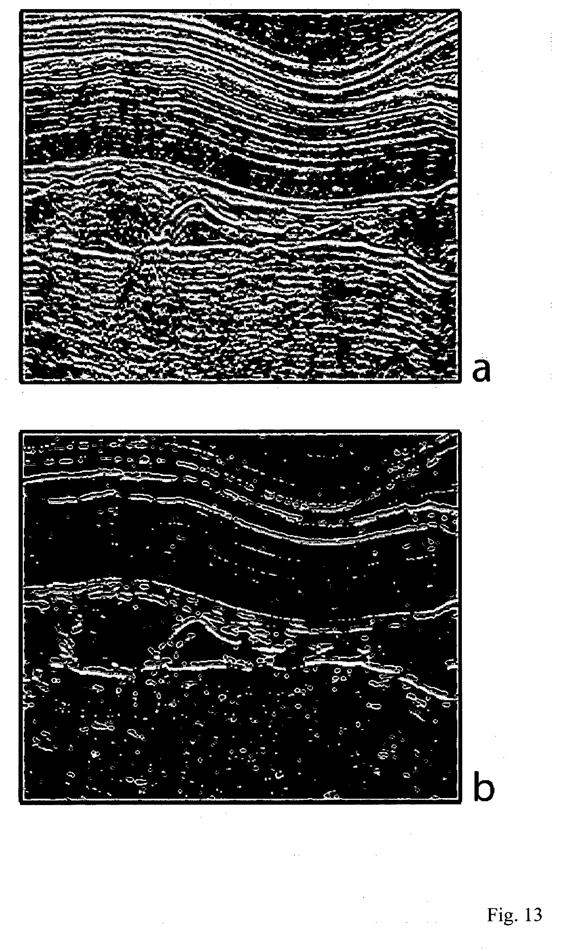

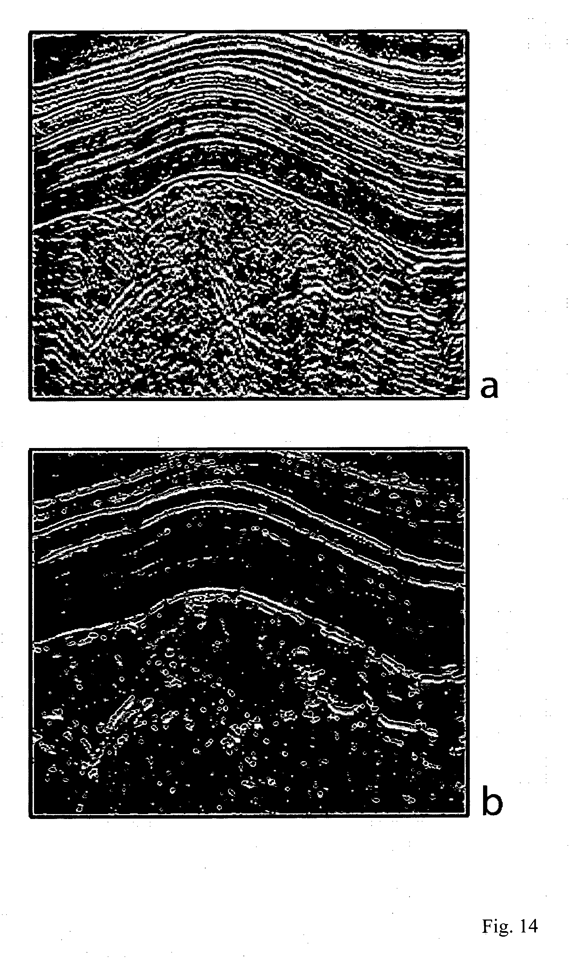

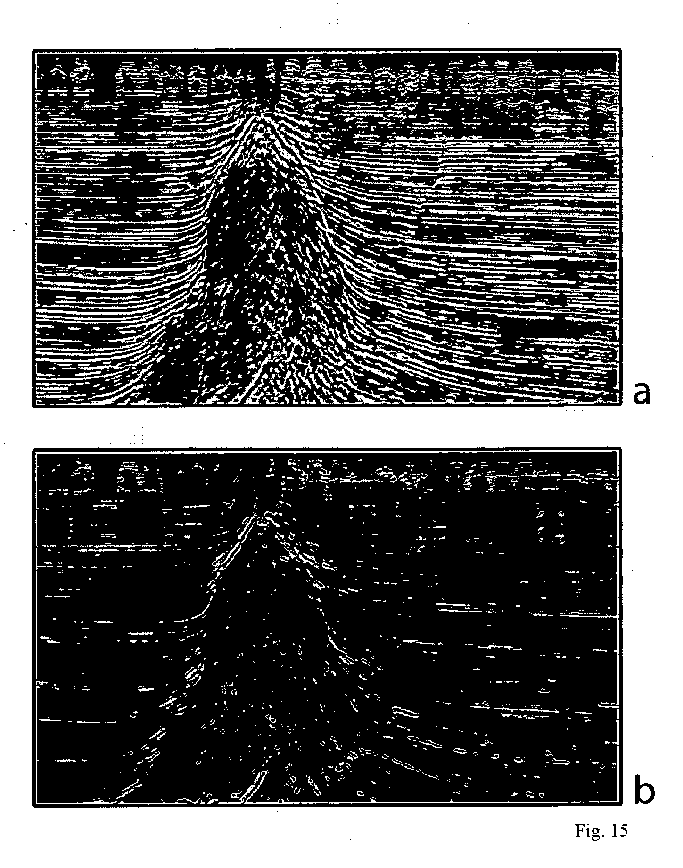

Figures 13, 14 and 15 show the results of applying voxel suppression to real data volumes. These views are vertical cross-sections through their respective data sets. Figures 13 and 14 are different cross-sections from the same data volume. They each have a horizontal band of salt in the middle of the data section. Figure 15 is from a separate survey and has a salt diapir in the center of the view.

Figure 13a shows the raw data volume before running the voxel suppression module 160 applies voxel suppression. Locally high-amplitude reflections are preserved by the voxel suppression technique (Figure 13b). Similarly, Figure 14b preserves the locally high-amplitude reflections present in the raw data section (Figure 14a).

Figure 15a contains raw seismic data from another survey. Figure 15b shows the result of the voxel suppression technique for this second data volume.

Significant reflections are preserved in each real data example, especially those associated with major lithologic contrasts (e.g., salt bodies) contained within the data volumes.

Thus, one exemplary operational embodiment of the operation of the voxel suppression module 160 is a running window operator that is convolved with the whole volume. For each operator position, a series of exemplary processing steps are performed. They are:

sort the voxels based on absolute value,
rescale all voxel values to make the local operator's standard deviation match the global standard deviation,
preserve the upper user-specified percent of rescaled values (zero out all other values),
scale the preserved values based on position within the operator using a cosine taper, and
output the tapered values in their original position.

In this manner, the locally significant amplitude events are preserved and given a regular expression, while insignificant reflections are removed. The resulting saved volume is sparse, including only the rescaled highest amplitude reflectors. The voxel suppression module 160 renders a volume sparse by removing all but the most significant reflections throughout the volume. The resulting volume emphasizes major acoustic impedance boundaries. These high impedance contrasts will be present at major lithology changes. As such, the application of voxel suppression can be a useful first step to highlight complex interfaces such as salt boundaries.

Attributes calculated from 3D seismic data volumes are commonly noisy and chaotic in their representation of geologic trends. The complex morphology and expression of geologic features can result in inconsistent performance of a given attribute for highlighting features of interest. Structural and diagenetic overprinting can also complicate attribute results.

The handling of noise and regularization of uneven attribute performance is potentially a very important research goal. An exemplary embodiment of a voxel density technique is a way to score the local significance of data trends within a 3-D seismic volume. Significant regions can then be enhanced or normalized, while insignificant regions can be suppressed or filtered out.

An exemplary operational embodiment of the voxel density module 170 includes a running window algorithm carried out by the running window module. For each operator position, the number of data points within the window that fall within a given threshold range are counted; yielding a density score. Areas of high density score are considered to have high confidence. Conversely, areas of low density score are assumed to be noise and are filtered out or deemphasized. Noise can be filtered by removing data points from regions of low density score. By smoothing high confidence regions less aggressively, significant edges can be preserved during smoothing. Volume contrast can also be enhanced in an attribute volume; boosting the signal-to-noise (S/N) ratio.

A variety of techniques can be used to control noise in a data volume. Mean and median filtering are methods of filtering that work well for random noise. Similarly, wavelet transforms are another powerful tool for the filtering of random noise. However, noise is not the only issue that plagues attribute results. Uneven performance is perhaps a greater impediment to the rapid utilization attribute results.

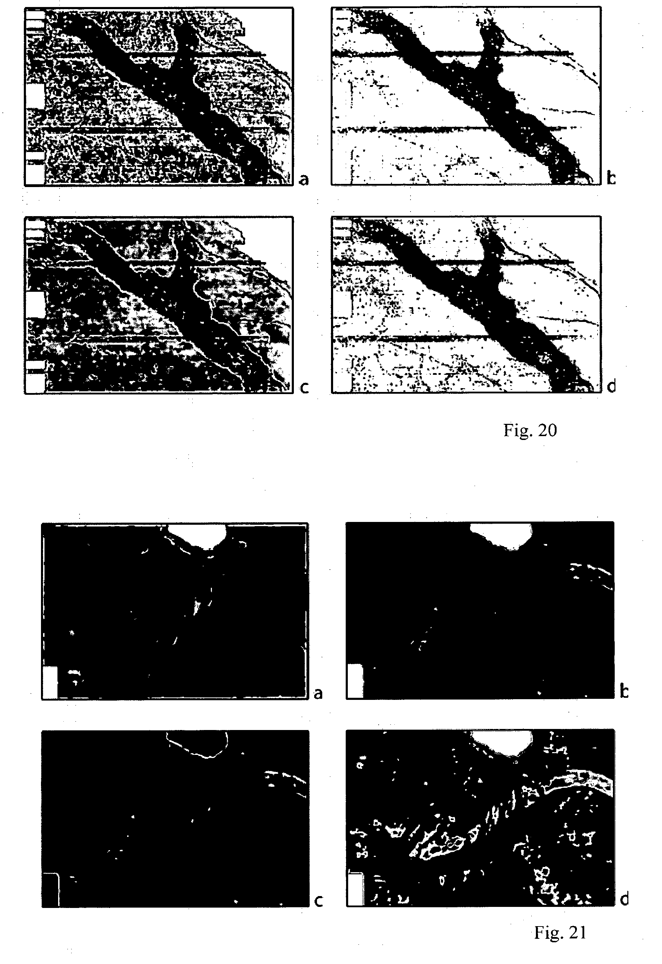

The realities of geology rarely mirror the simplicity of conceptual models. Factors not accounted for by conceptual models commonly confuse an attribute designed to image a given geologic feature. Further complicating attribute performance is the variety of scales imaged by seismic surveys. Sub-seismic resolution features can introduce tuning effects into the data that are indistinguishable from noise by many attributes. Figure 21b shows the curvature response of a channel calculated from a flattened data volume. Although visually useful, the lack of a uniform expression of the channel complicates manual interpretation and prevents any automatic handling of the channel interpretation.

The exemplary voxel density technique uses local data redundancy to create a stable estimate of confidence in a data set. Features of interest in a data volume generally persist for some distance in each direction. The persistence of these features can be used to overcome their uneven expression in a given data volume. This is accomplished by the convolution of a 3-D operator with the data set. A measure of confidence is calculated by the voxel density module 170 for all voxels. This confidence score can then be used to guide filtering and enhancement operations.

The exemplary voxel density module 170 convolves a 3-D operator with the input data volume. For each position of the running window operator, the number of voxels that fall within a given threshold range are counted. The result of this counting operation is the density score of the window's center voxel. High density scores indicate voxels of high confidence. Low density scores highlight voxels of low confidence. In this manner a stable, non-chaotic, estimate of volume (or attribute) quality can be achieved. The user can select a specific range of density values that are significant, and highlight the areas where the values exist in a high concentration.

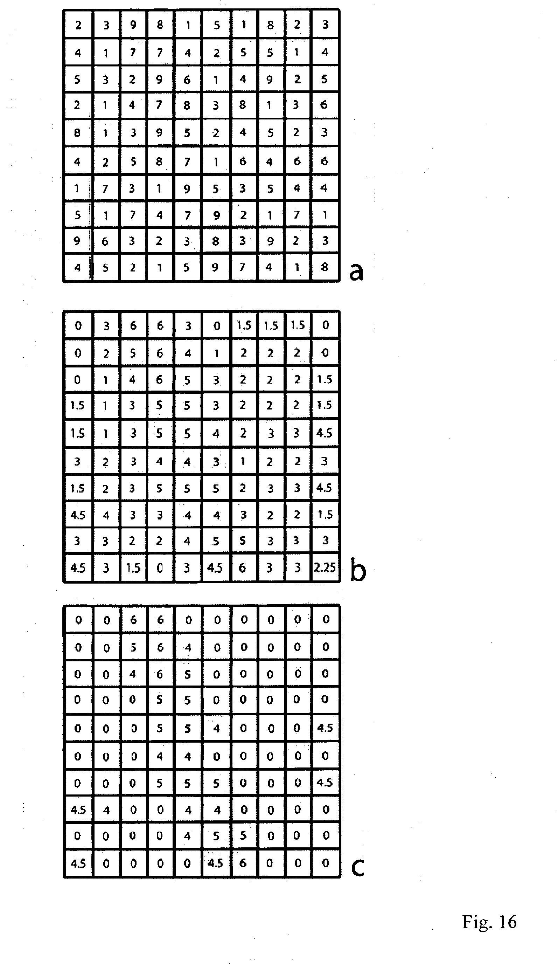

Fig. 16 demonstrates the numerical results of voxel density calculations on a 10x10 data array. Figure 16a shows a raw data array containing values between 0 and 9. There exists a diagonal trend of high values indicated by the gray band in the array. Figure 16b contains the density scores resulting from calculations on a 3x3 operator using accepting all values greater than 6. Edge effects are handled by scaling the density score by the ratio of the maximum number of samples possible divided by the local number of samples in the operator. Thus, in a corner the raw density is corrected by multiplying it by the ratio of 9 (the total operator size) divided by 4 (the number of samples in the operator at that position). Figure 16c then contains the results of limiting the output density scores to values of 4 or greater. This thresholding introduces the ability to filter out regions of low confidence

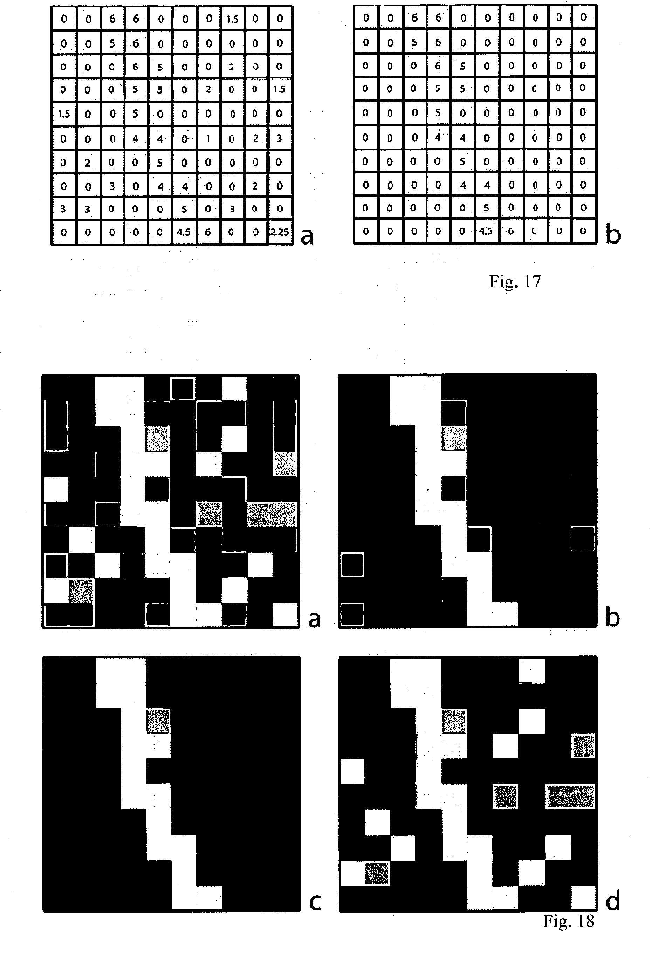

Density estimates may be determined in two exemplary ways. In the first, the voxel density module 170 determines a density score for every operator position. This is the manner of calculation used in Fig. 16. In the second, the center voxel must fall within the specified threshold range for the density score to be calculated. This additional constraint results in a less smooth denisty score volume, but has the advantage of not blurring trends present in the data. The use of this center-pass method of density scoring makes the voxel density process edge-preserving. A null value is output for voxels that do not satisfy the center-pass pre-condition. Fig. 17a contains the density score results of the 10x10 sample array requiring that the center voxel fall in the proper threshold range before continuing with density calculations. Fig. 17b contains the results of applying a minimum threshold of 4 to the density scores in Fig. 17a. The 'clutter' present in Fig. 16c has been removed, and the representation of the high-value trend (highlighted by the gray band) is more focused.

Fig. 18 contains a graphical representation of the results described above. Figure 18a contains the same raw data as Figure 16a. Figure 18b is the result of outputting the original data array value for each non-null position in the minimum density thresholded array (Figure 16c). Fig. 18c adds the element of requiring the center voxel to fall in the valid threshold range (similar to Fig. 17b). Fig. 18d shows the result of a simple thresholding operation where no density calculation was performed. This can be thought of as a voxel density result from a 1x1 operator accepting all values 6 or greater. Clearly, these results are inferior to those present in Figure 18c. This difference demonstrates the synergy of combining thresholding with a 3-D estimate of confidence. In this sense, voxel density can be thought of as a spatially-weighted thresholding operation.

When applied to a data volume, voxel density produces a density score volume. This volume is similar to the results presented in Figures 16 and 17. The density score volume is a way to visualize the importance of different trends present in the data. Areas with coherent, persistent data trends are enhanced, while incoherent regions are deemphasized.

The density score volume can also be thought of as a volumetric confidence estimate. With this estimate of data confidence, a variety of operations can be performed. These operations include one or more of noise filtering, edge-preserving smoothing, and volume contrast enhancement.

An input data volume can be modified and enhanced in a variety of ways using the voxel density module 170. The density score volume can be thought of as an estimate of confidence for trends in the volume. Using this confidence estimate, it is possible to enhance the volume through density score-guided rescaling of voxel values. Threshold filtering can remove data that are not of interest. It is also possible to control the degree of smoothing, where regions of low confidence are smoothed more than regions of high confidence.

Filtering by Density Threshold

Binary filtering can be accomplished by removing voxels that have a density score lower than a specified cutoff. In this manner, insignificant data regions can be removed. Voxels that have a density score lower than the specified minimum are replaced by null values. This is demonstrated on a numerical array in Figures 18b and 18c. Figure 20b shows the results of this process being applied to a Coherence image of a submarine canyon. Similarly, Figure 21c contains the result of applying this same procedure to the curvature image of a flattened channel (Figure 21b).

Density-Guided Smoothing

The same criterion of whether a voxel passes the minimum density threshold can be used to control smoothing operations within a data volume. By smoothing voxels that fail the minimum density test more than voxels that pass the test, insignificant data regions can be deemphasized. It is also possible to control which voxels are included in the smoothing operations.

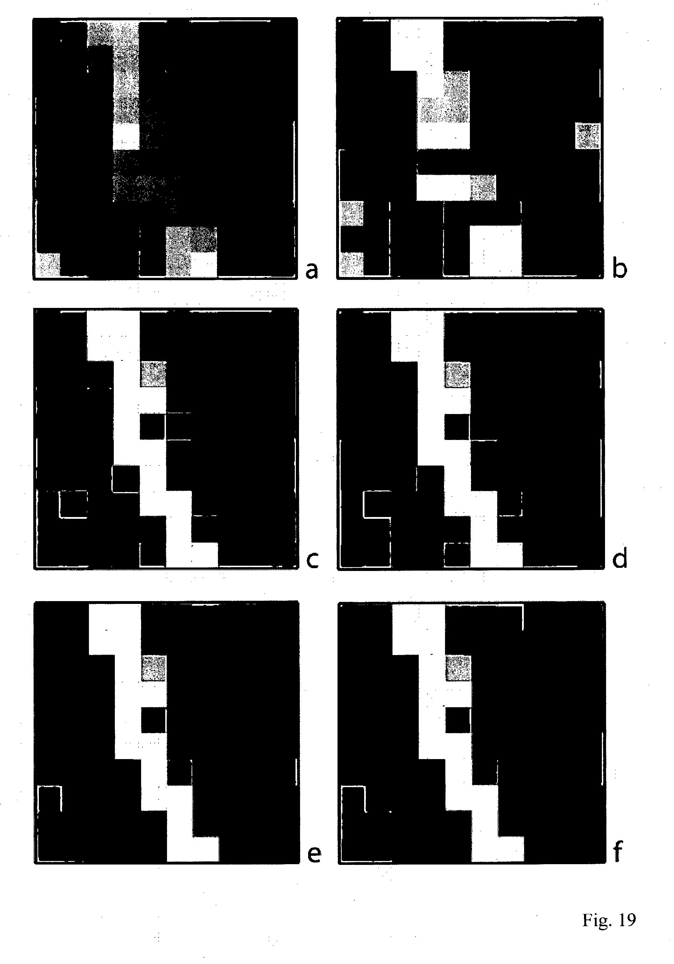

Figures 19a and 19b contain the results of applying a 3x3 mean and median filter, respectively, to the raw data in Figure 18a. Figure 19c shows the result of applying the mean smoothing only to voxels that fail the minimum density test.

Voxels that pass the test are deemed to be high confidence, and are not smoothed. Similarly, Figure 19d contains the result of applying a median operator only to voxels that fail the minimum density test. Figure 19e and 19f show the result of modifying the selective smoothing to only include voxels that fall outside the initial threshold range. In both cases, this has the result of suppressing the values in the smoothed regions (darkening them). This results in a greater visual contrast, and an improved S/N ratio for the sample array.

Clearly, Figures 19e & 19f contain superior results for the smoothing of the raw data array in Figure 18a.

Figure 20c contains the results of applying this confidence-adaptive smoothing to the Coherence image of a submarine canyon. Only voxels that failed the minimum density test were smoothed. Only voxels that fall outside the valid threshold range were included in smoothing. It should be noted that this method of adaptive smoothing has preserved the fine detail present in the edges in the canyon.

Contrast Enhancement of Data Volumes

Whether a voxel passes or fails the minimum density test can be used to control rescaling of the data volume. Voxels that pass are rescaled by a factor greater than 1. Those that fail the test are rescaled by a factor less than 1. The precise rescaling factor depends on the original data value, and the density score of that voxel. In concept, each voxel is rescaled by a percent of the difference between its own value and the extreme value it is being rescaled towards. The percent rescaling is controlled by two equations. For voxels that pass the minimum density test:

$$\text{Ratiopass} = 1 + (\text{Dscore} - \text{Dneutral}) / (\text{Nvalues} - \text{Dneutral})$$

For voxels that fail the minimum density test, the rescaling ratio equation is:

$$\text{Ratiofail} = (\text{Dneutral} - \text{Dscore}) / \text{Dneutral}$$

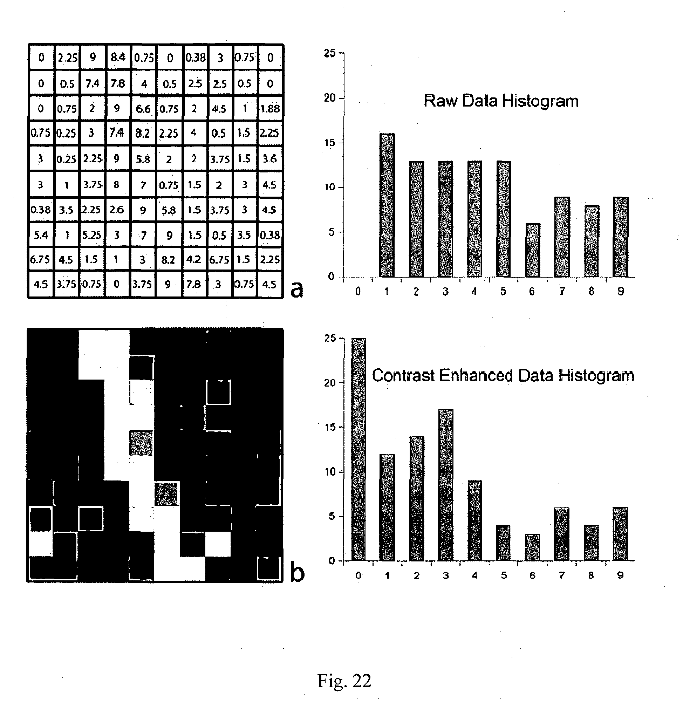

This ratio is then multiplied by the original voxel value to obtain the rescaled voxel value. The addition of a 'rescaling strength' term allows for a more subtle rescaling operation. Figure 22 contains the numerical and graphical results of applying this type of rescaling to the sample data array. The trend of high values in Figure 16a (highlighted by the gray band) has been enhanced, while suppressing the scatter of values that surround it. Figure 22b has a much improved S/N ratio over the original array in Figure 18a. The effect on the data histogram is also shown.

Figure 20d shows the result of applying this operation to the Coherence image of the submarine canyon. This rescaling was done with a strength of 0.5. The same type of contrast enhancement was performed on the curvature image of a channel for Figure 21d. As with the adaptive smoothing, significant edges have been preserved in the data while improving the S/N ratio.

Locally Adaptive Operations

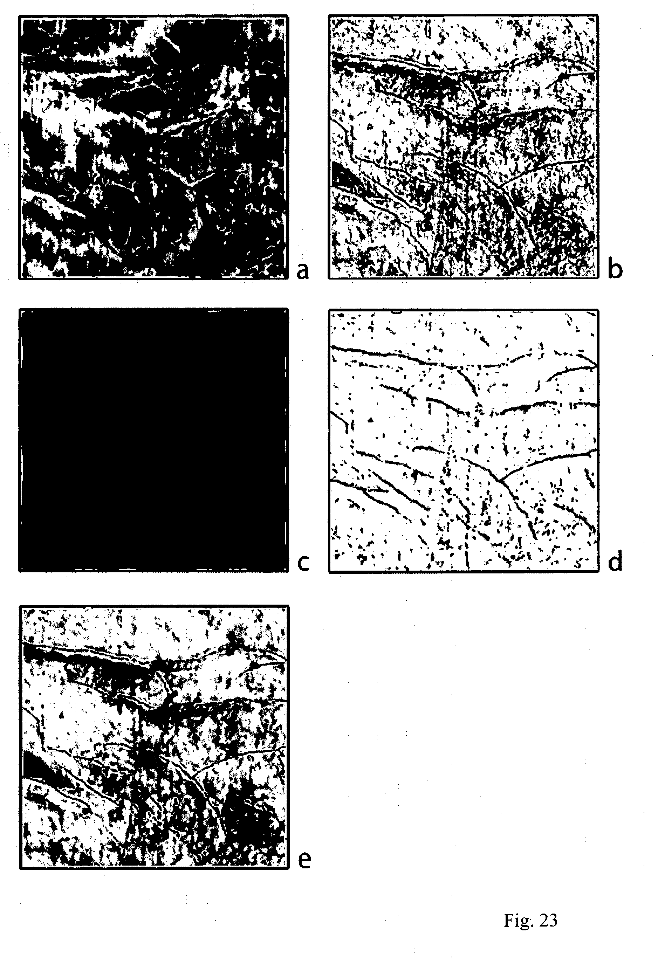

It is also possible to modify the rescaling operation to only rescale locally high values. By linking the threshold range to local variance in the data volume, only locally high voxels will be counted in the density calculations. This prevents a high noise background from overwhelming the voxel density process, and provides a more robust result where the characteristic voxel value of a feature varies significantly. Figure 23b is a Coherence image showing a series of faults. It can be visually determined that a single threshold range cannot represent all sections of the faults present without allowing much of the surrounding noise to also be enhanced. The significant data are recognized more by their linear trends and being locally high values. By linking the threshold range to local variance, these faults can be enhanced while deemphasizing the surrounding noise.

Figure 23 shows the effect of locally adaptive voxel density-controlled smoothing and contrast enhancement on a time slice from a Gulf of Mexico data set. Figure 23a contains the raw data that have had a light (3x3) median filter applied to reduce random noise. Figure 23b is the result of Coherence to the data volume. Figures 23d & 23e were produced using locally variable thresholds controlled by the variance distribution seen in Figure 23c. Areas with higher variance (tending towards a lighter gray) cause a tighter threshold range to be used in the density calculations. Figures 23d & 23e contain locally adaptive contrast enhancement and smoothing of the raw Coherence slice in Figure 23b, respectively.

Figure 24 demonstrates the same operations applied to a deeper time slice of the same volume. A single threshold range would not successfully capture all the significant data trends present in Figure 24b. Thus, a locally adaptive variance-controlled approach to voxel density calculations yields good results. Figures 24c & 24d contain contrast enhanced and smoothed results, respectively.

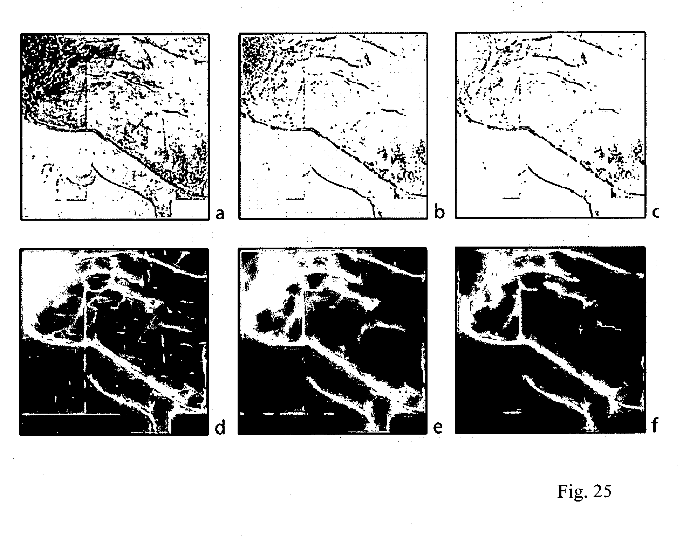

Figure 25a is a Coherence image showing a portion of a salt body, with surrounding faults. Figures 25b & 25c show the contrast enhanced data. The overall trends of the faults are preserved, while the surrounding insignificant data regions are reduced in value. These data volumes were then processed with fault enhance, an attribute that enhances dipping planar features in a Coherence volume. Figure 25d is the fault enhanced output for the raw Coherence image. It is hindered by a multitude of spurious lineaments. These erroneous data are greatly reduced when the fault enhanced volume are processed from the contrast enhanced coherence volumes. Figure 25f has the highest S/N ratio of the three fault enhance volumes. It was calculated from the highest contrast volume (Figure 25c).

The voxel density module provides a way to score confidence in a data volume. The number of voxels that fall within a given threshold range are counted within a moving 3-D operator. This result of this count is the density score of the operator's center voxel. Voxels with a high density score are considered significant, while those with a low density score can be considered noise. Significant data regions can be preserved or enhanced, while insignificant data regions are smoothed or filtered out.

Voxel density-guided smoothing and rescaling operations are edge preserving. Significant trends can be enhanced while maintaining their overall shape and internal texture. This is accomplished by selectively smoothing insignificant areas more than valid data trends. Similarly, significant data trends can be selectively gained upward while muting surrounding noise. Such an operation preserves the original flavor of the data, but with an increased S/N ratio.

The threshold range included in density scoring can be linked to local variance in the data volume. In this manner, locally significant data trends are preserved. This allows voxel density to be used for data sets that have significant data value ranges that vary between data regions.

Voxel density represents a potentially very valuable tool when used to pre-process data for visual and automated interpretation. For example, at least a S/N ratio can be improved, and visual emphasis can be given to important trends through selective smoothing.

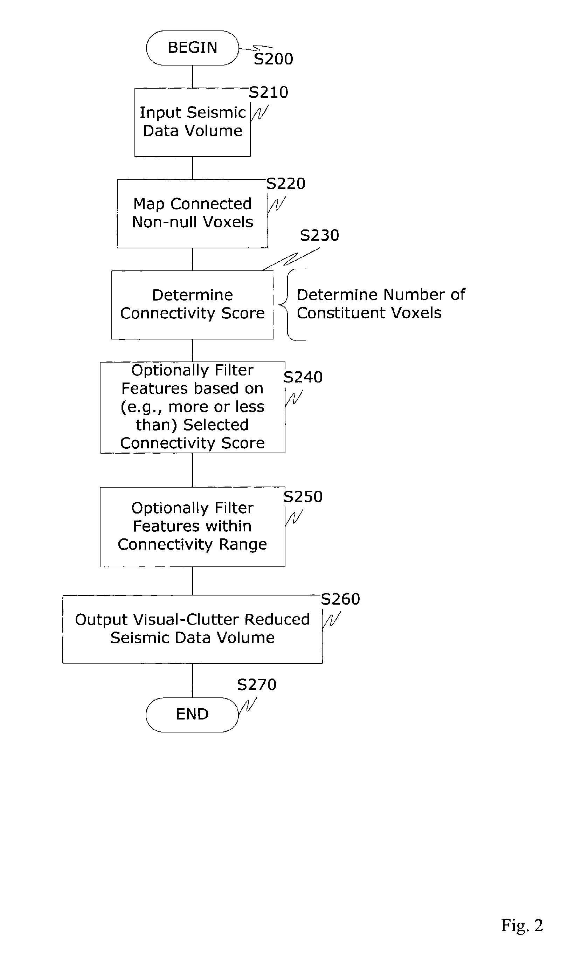

Fig. 2 illustrates an exemplary embodiment of determining voxel connectivity in accordance with this invention. In particular, control begins in step S200 and continues to step S210. In step S210, a data volume, such as a seismic data volume is input. Next, in step S220, connected non-null voxels are mapped. Then, in step S230, the connectivity score is determined in accordance with the number of constituent voxels. Control then continues to step S240.

In optional step S240, and based on a selectivity score, features can be filtered. Similarly, in step S250, features can be filtered if they are within a connectivity range. Control then continues to step S260.

In step S260, a visual-clutter reduced seismic data volume is output and saved. Control then continues to step S270 where the control sequence ends.

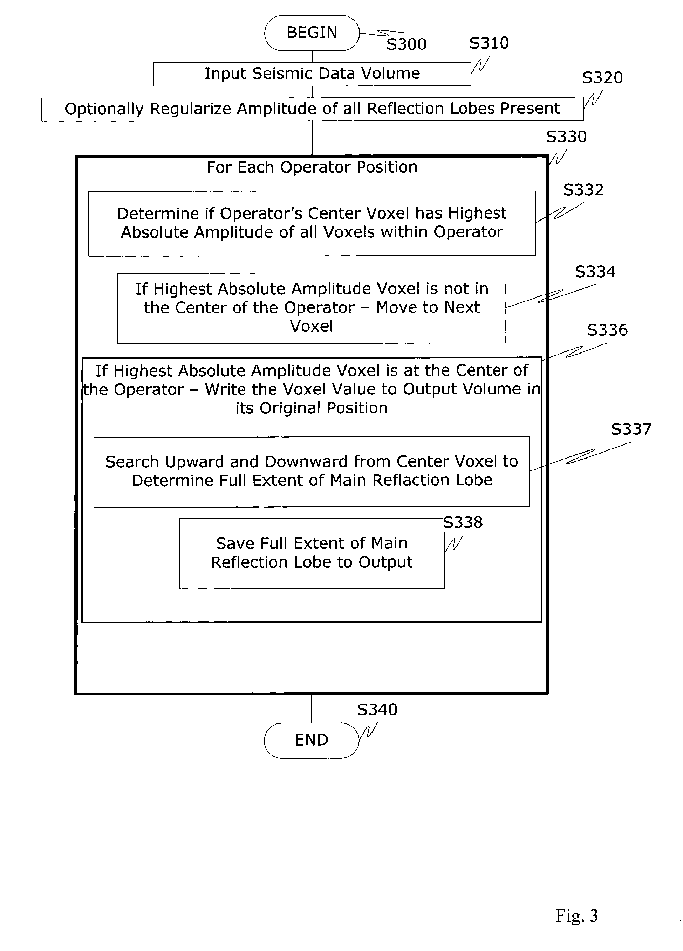

Fig. 3 illustrates an exemplary method of reducing reflections according to this invention.. Specifically, control begins in step S300 and continues to step S310. In step S310, a seismic data volume is input. For example, the input data volume can be the data volume saved in the process illustrated in Fig. 2. Next, in step S320, the amplitude of all reflection lobes can optionally be regularized with control continuing to step S330.

In step S330, and for each operator position, steps S332-S338 are performed. In particular, in step S332, a determination is made whether the operator's center voxel has the highest absolute amplitude of all voxels within the operator. Next, in step S334, and if the highest amplitude voxel is not in the center of the operator, the process moves to the next voxel.

In step S336, and if the highest absolute amplitude voxel is at the center of the operator, the voxel value is written to the output volume in its original position. Next, in step S337, a search upward and downward from the center voxel is performed to determine the extent of the main reflection lobe. Then, in step S338, the full extent of the main reflection lobe is saved to the output. Control then continues to step S340 where the control sequence ends.

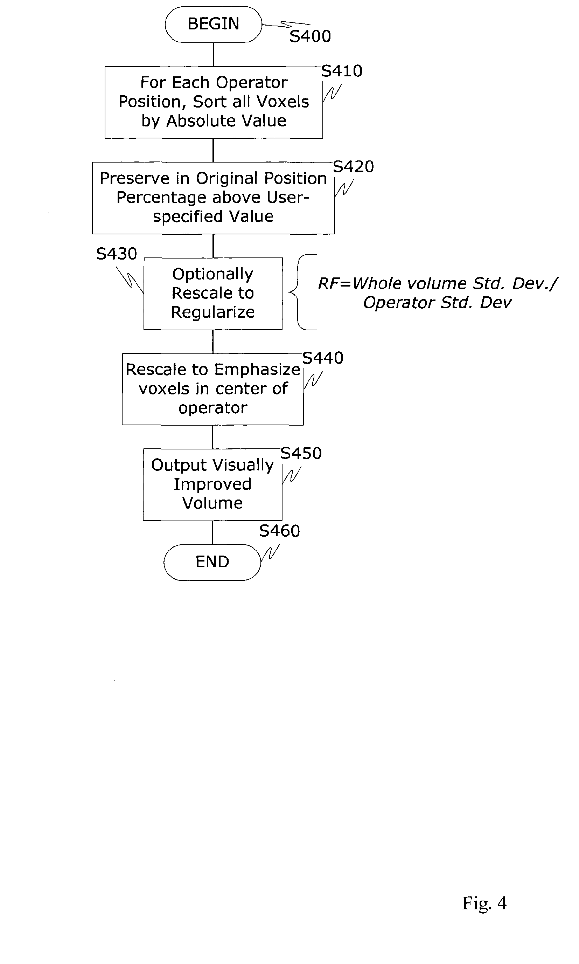

Fig. 4 illustrates an exemplary method of voxel suppression with control beginning in step S400 with the input of a volume, such as the volume saved in Fig. 3 and continuing to Step S410. In step S410, and for each operator position, all voxels are sorted by absolute value. Next, in step S420, the voxels above a user-specified value are preserved in their original position. Then, in step S430, rescaling to regularize is optionally performed in accordance with RF=Whole volume Std.Dev/Operator Std.Dev.. Control then continues to step S440.

In step S440, voxels in the center of the operator are rescaled such that they are emphasized. Next, in step S450, the visually improved volume is output and saved.

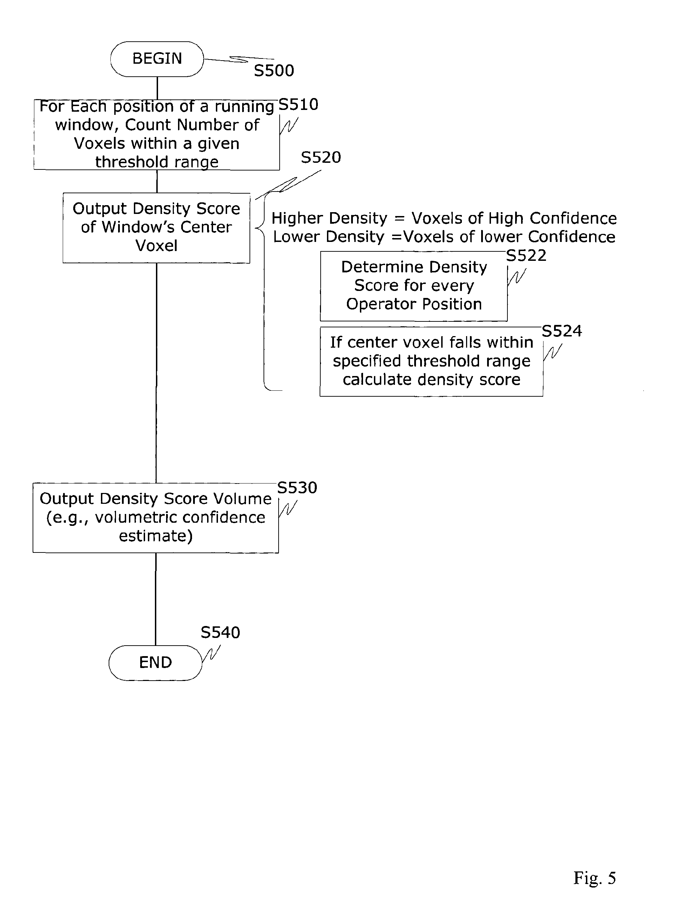

Fig. 5 illustrates an exemplary voxel density determination method. Control begins in step S500 with the input of volume, such as the volume saved in Fig. 4, and continues to step S510. In step S510, and for each position of a running window, the number of voxels within a given threshold range are counted. Next, in step S520, the density score of the window's center voxel is output. This is accomplished by subroutines S522 and S524. Specifically, in step S522, the density sore for every operator position is determined. Then, in step S524, if the center voxel falls within a specified threshold range, the density score is calculated, with a higher density score being correlated to voxels of high confidence and a lower density score being correlated to voxels of lower confidence.

In step S530, the density score volume is output and saved, for example, as a volumetric confidence estimate. Control then continues to step S540 where the control sequence ends.

Figures 26-30 illustrate various exemplary techniques disclosed herein applied to seismic data. It should be appreciated however that the techniques disclosed herein can also be used on other types of data such as medical imaging data, 2-or 3-D data representing an article, body, object(s) or the like.

Fig. 26 illustrates voxel density applied to coherence. Panel (a) contains a coherence image of a submarine canyon. Panel (b) shows the result of applying binary voxel density filtering to the data in Panel (a). Voxels that fail the minimum density threshold test are assigned a null value. Panel (c) show the result of voxel density controlled smoothing. Voxel density scores are used to alter the data contrast in Panel (d). Voxel density-controlled smoothing and contrast enhancement preserve the original context of the data, rather than simply removing voxels that fail the density threshold test.

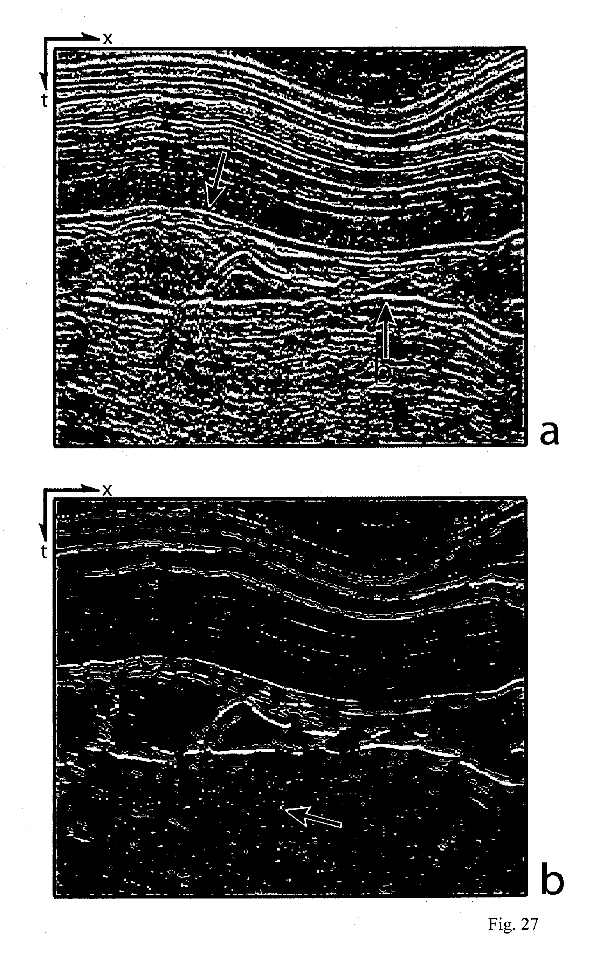

Fig. 27 illustrates an example of voxel suppression. Panel (a) contains a raw amplitude section. The top and bottom of the horizontal tabular salt body are indicated by the arrows in panel (a). Panel (b) shows the result of applying voxel suppression to the data in panel (a). Higher amplitude events (including those associated with the salt body) have been preserved, while most of the surrounding low amplitudes have been removed. Some scattered reflection fragments remain (as indicated by the arrow in panel (b).

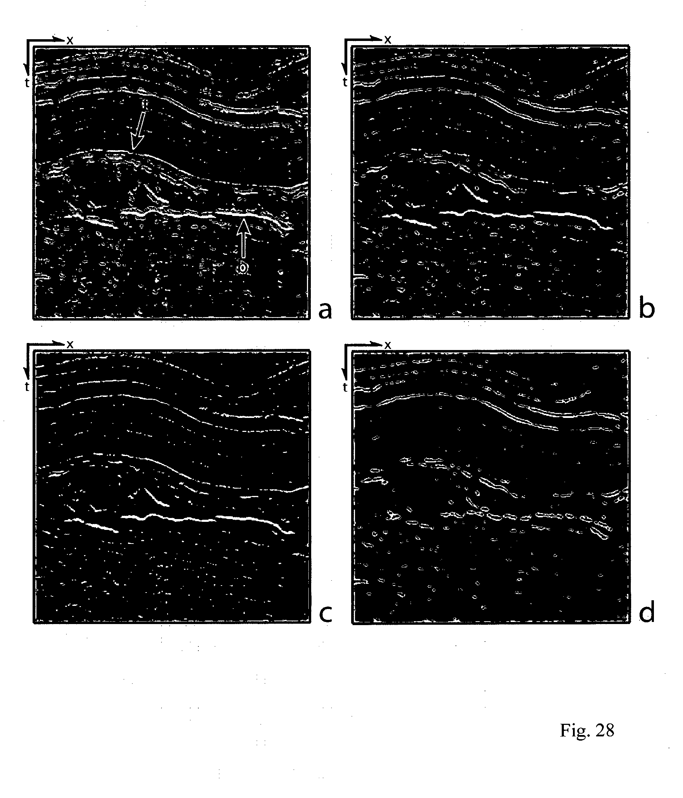

Fig. 28 illustrates an example of the result of reflection collapsing. Specifically, the reflection collapsing technique was applied to sparse seismic data. Panel (a) contains a voxel suppression result. The data are now sparse. This sparseness improves the performance of the reflection collapser (panel (b)). Panels (c) and (d) were processed with the added constraint that only peaks or troughs would be considered in this exemplary reflection collapser operation, respectively. Panel (c) contains the best result for highlighting the tabular salt body indicated by the arrows in panel (a).

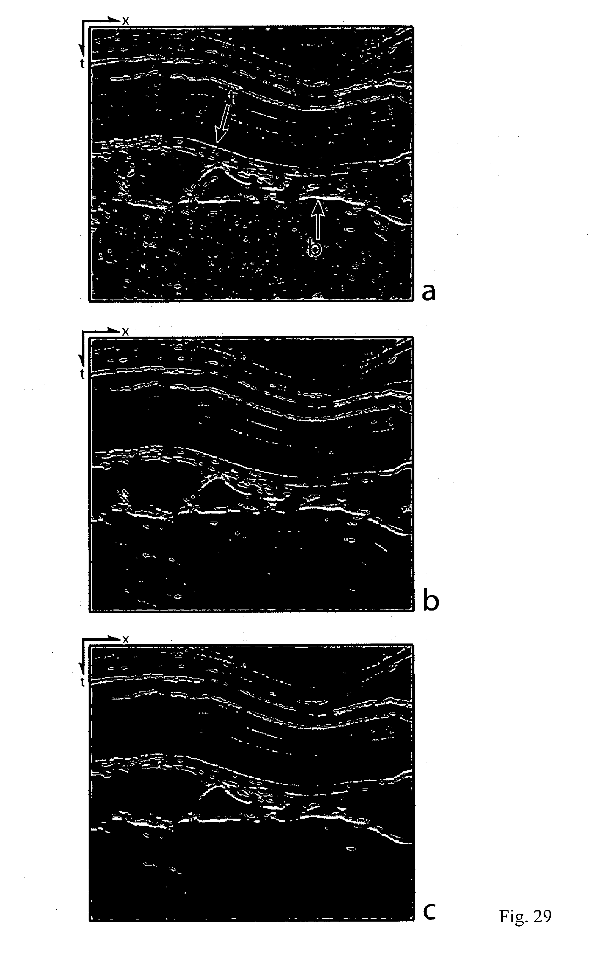

Fig. 29 illustrates an example of the voxel connectivity technique. Panel (a) contains a voxel suppression result. The top and bottom of the horizontal tabular salt body are indicated by the arrows in panel (a). Panel (b) shows the result of removing all connected voxel bodies that consist of fewer than 200 voxels. Panel (c) contains the better result of filtering out all connected bodies with fewer than 800 member voxels.

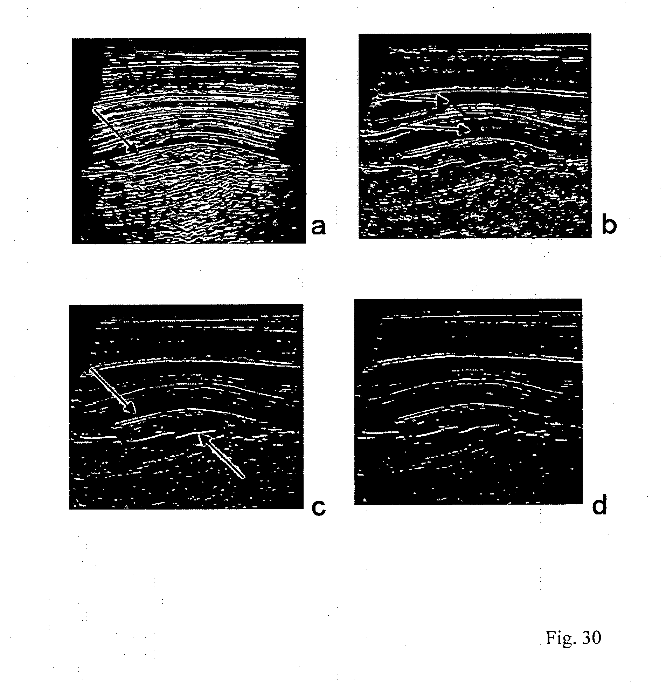

Fig. 30 illustrates an exemplary attribute sequence. In this attribute sequence the whole workflow described herein is applied to real data. Panel (a) contains an amplitude slice from a North Sea data volume. The location of the top of salt is indicated by the arrow in panel (a). Panel (b) shows the result of applying Voxel Suppression the data shown in panel (a). Note that the majority of non-salt reflections have been filtered out (as highlighted by the arrows). The result of applying reflection collapser to the voxel suppression output is shown in panel (c). Panel (d) contains the final result filtered by voxel density. The scattered reflection fragments highlighted by the arrows in panel (c) have been removed.

While the above-described flowcharts have been discussed in relation to a particular sequence of events, it should be appreciated that changes to this sequence can occur without materially effecting the operation of the invention. Additionally, the exact sequence of events need not occur as set forth in the exemplary embodiments. Additionally, the exemplary techniques illustrated herein are not limited to the specifically illustrated embodiments but can also be utilized with the other exemplary embodiments and each described feature is individually and separately claimable.

The systems, methods and techniques of this invention can be implemented on a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, any means, or the like. In general, any device capable of implementing a state machine that is in turn capable of implementing the methodology illustrated herein can be used to implement the various methods and techniques according to this invention.

Furthermore, the disclosed methods may be readily implemented in processor executable software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The systems, methods and techniques illustrated herein can be readily implemented in hardware and/or software using any known or later developed systems or structures, devices and/or software by those of ordinary skill in the applicable art from the functional description provided herein and with a general basic knowledge of the computer and geologic arts.

Moreover, the disclosed methods may be readily implemented in software that can be stored on a computer-readable storage medium, executed on programmed general-purpose computer with the cooperation of a controller and memory, a special purpose computer, a microprocessor, or the like. The systems and methods of this invention can be implemented as program embedded on personal computer such as an applet, JAVA® or CGI script, in C or C++, Fortran, or the like, as a resource residing on a server or computer workstation, as a routine embedded in a dedicated system or system component, or the like. The system can also be implemented by physically incorporating the system and/or method into a software and/or hardware system, such as the hardware and software systems of a dedicated seismic interpretation device.

It is therefore apparent that there has been provided, in accordance with the present invention, systems and methods for interpreting data. While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

Further aspects of the invention are:

1. A computer implemented method for processing seismic data comprising:

receiving a seismic data volume;
determining, with the assistance of a processor, a voxel connectivity score for constituent members of one or more connected features in the data volume;
collapsing reflections within the data volume to reduce seismic reflections;
emphasizing high amplitude events using voxel suppression;
scoring the local significance of data trends in the seismic data volume; and
saving an output data volume.

2. The method of aspect 1, wherein the output data volume is utilized by a seismic interpretation system to do one or more of interpret salt bodies, interpret canyons, interpret channels, interpret horizons, surface wrapping and surface draping, which can be output and visualized on a display.

3. The method of aspect 2, wherein the visualization is a 3-D rendering of geologic formations.

4. The method of aspect 1, further comprising mapping connected non-null voxels.

5. The method of aspect 4, further comprising determining a connectivity score based on a number of constituent voxels.

6. The method of aspect 5, further comprising filtering one or more features based on one or more of a score and a range of scores.

7. The method of aspect 6, further comprising storing a visual-clutter reduced seismic data volume.

8. The method of aspect 1, further comprising determining if a highest absolute amplitude voxel is at a center of an operator.

9. The method of aspect 8, further comprising determining an extent of a reflection lobe.

10. The method of aspect 1, further comprising sorting a portion of voxels by absolute value.

11. The method of aspect 10, further comprising preserving a percentage of the portion of voxels above a certain value or absolute value.

12. The method of aspect 11, further comprising rescaling to emphasize voxels at a center of an operator.

13. The method of aspect 1, further comprising counting a number of voxels within a given threshold range.

14. The method of aspect 13, further comprising determining and outputting a density score of a window's center voxel.

15. The method of aspect 14, further comprising saving and outputting a density score volume including a volumetric confidence estimate.

16. A computer implemented method for processing seismic data in a data volume comprising:

receiving the seismic data volume; and
determining, with the assistance of a processor, a voxel connectivity score for constituent members of one or more connected features in the data volume.

17. The method of aspect 16, further comprising mapping connected non-null voxels.

18. The method of aspect 17, further comprising determining a connectivity score based on a number of constituent voxels.

19. The method of aspect 18, further comprising filtering one or more features based on one or more of a score and a range of scores.

20. The method of aspect 19, further comprising storing a visual-clutter reduced seismic data volume.

21. A computer implemented method of processing a seismic data volume comprising:

receiving the seismic data volume; and
collapsing reflections within the data volume to reduce seismic reflections.

22. The method of aspect 21, further comprising determining if a highest absolute amplitude voxel is at a center of an operator.

23. The method of aspect 22, further comprising determining an extent of a reflection lobe.

24. A computer implemented method for processing seismic data comprising:

receiving the seismic data volume;
emphasizing high amplitude events using voxel suppression; and
sorting a portion of voxels by absolute value.

25. The method of aspect 24, further comprising preserving a percentage of the portion of voxels above a certain value.

26. The method of aspect 25, further comprising rescaling to emphasize voxels at a center of an operator.

27. A computer implemented method for processing seismic data comprising:

receiving a seismic data volume;
scoring the local significance of data trends in the seismic data volume;
counting a number of voxels within a given threshold range; and
determining and outputting a density score of a window's center voxel.

28. The method of aspect 27, further comprising saving and outputting a density score volume including a volumetric confidence estimate.

29. A system for processing seismic data comprising:

an I/O interface adapted to receive a seismic data volume;
a voxel connectivity module adapted to determine, with the assistance of a processor, a voxel connectivity score for constituent members of one or more connected features in the data volume;
a reflection collapse module adapted to collapse reflections within the data volume to reduce seismic reflections;
a voxel suppression module adapted to emphasize high amplitude events using voxel suppression; and
a voxel density module adapted to score the local significance of data trends in the seismic data volume.

30. The system of aspect 29, wherein the output data volume is utilized by a seismic interpretation system to do one or more of interpret salt bodies, interpret canyons, interpret channels, interpret horizons and surface wrapping, surface draping, which can be output and visualized on a display.

31. The system of aspect 30, wherein the visualization is a 3-D rendering of geologic formations.

32. The system of aspect 29, wherein the voxel connectivity module further maps connected non-null voxels.

33. The system of aspect 32, wherein the voxel connectivity module further determines a connectivity score based on a number of constituent voxels.

34. The system of aspect 33, wherein the voxel connectivity module further filters one or more features based on one or more of a score and a range of scores.

35. The system of aspect 34, wherein the voxel connectivity module in cooperation with a controller stores a visual-clutter reduced seismic data volume.

36. The system of aspect 29, wherein the reflection collapse module further determines if a highest absolute amplitude voxel is at a center of an operator.

37. The system of aspect 36, wherein the reflection collapse module further determines an extent of a reflection lobe.

38. The system of aspect 29, wherein the voxel suppression module further sorts a portion of voxels by absolute value.

39. The system of aspect 38, wherein the voxel suppression module further preserves a percentage of the portion of voxels above a certain value or absolute value.

40. The system of aspect 39, wherein the voxel suppression module further rescales to emphasize voxels at a center of an operator.

41. The system of aspect 29, wherein the voxel density module further counts a number of voxels within a given threshold range.

42. The system of aspect 41, wherein the voxel density module further determines and outputs a density score at a window's center voxel.

43. The system of aspect 42, wherein an output a density score volume is stored that includes a volumetric confidence estimate.

44. A system for processing seismic data comprising:

an I/O interface adapted to receive the seismic data volume; and
a voxel connectivity module adapted to determine, with the assistance of a processor, a voxel connectivity score for constituent members of one or more connected features in the data volume.

45. The system of aspect 44, wherein connected non-null voxels are mapped.

46. The system of aspect 45, wherein a connectivity score is determined based on a number of constituent voxels.

47. The system of aspect 46, further comprising a filtering module adapted to filter one or more features based on one or more of a score and a range of scores.

48. The system of aspect 47, wherein a visual-clutter reduced seismic data volume is stored.

49. A system for processing seismic data comprising:

an I/O interface adapted to receive the seismic data volume; and
a reflection collapser module adapted to collapse reflections within the data volume to reduce seismic reflections.

50. The system of aspect 49, wherein the reflection collapse module further determines if a highest absolute amplitude voxel is at a center of an operator.

51. The system of aspect 50, wherein the reflection collapse module further determines an extent of a reflection lobe.

52. A system for processing seismic data comprising:

an I/O interface adapted to receive the seismic data volume;
a voxel suppression module adapted to:

emphasize high amplitude events using voxel suppression; and
sort a portion of voxels by absolute value.

53. The system of aspect 52, wherein the voxel suppression module further preserves a percentage of the portion of voxels above a certain value or absolute value.

54. The system of aspect 53, wherein the voxel suppression module further rescales to emphasize voxels at a center of an operator.

55. A system for processing seismic data comprising:

an I/O interface adapted to receive a seismic data volume;
a voxel density module adapted to:

score the local significance of data trends in the seismic data volume;
count a number of voxels within a given threshold range; and
determine and output a density score of a window's center voxel.

56. The system of aspect 55, wherein a density score volume including a volumetric confidence estimate is saved.

57. One or more means for performing the steps enumerated in claims 1-28.

58. A data volume stored on a computer-readable storage media including data representing geologic information formed in accordance with any one or more of the steps in claims 1-28.

59. A computer-readable storage media having stored thereon instructions that when executed by a processor performs the steps of any one of aspects 1-28.

**Claims**

1.  A computer implemented method for processing seismic data comprising:

receiving a seismic data volume;
emphasizing high amplitude events using voxel suppression; and
sorting a portion of voxels by absolute value.

2.  The method of claim 1, further comprising preserving a percentage of the portion of voxels above a certain value and/or absolute value.

3.  The method of claim 1 or 2, further comprising rescaling to emphasize voxels at a center of an operator.

4.  The method of any of the preceding claims, further comprising:

determining, with the assistance of a processor, a voxel connectivity score for constituent members of one or more connected features in the data volume; and/or
collapsing reflections within the data volume to reduce seismic reflections; and/or
scoring the local significance of data trends in the seismic data volume; and/or

saving an output data volume.

5. The method of any of the preceding claims, wherein the output data volume is utilized by a seismic interpretation system to do one or more of interpret salt bodies, interpret canyons, interpret channels, interpret horizons, surface wrapping and surface draping, which can be output and visualized on a display, preferably wherein the visualization is a 3-D rendering of geologic formations.

6. The method of any of the preceding claims, further comprising:

mapping connected non-null voxels, preferably further comprising determining a connectivity score based on a number of constituent voxels; and/or
determining if a highest absolute amplitude voxel is at a center of an operator, preferably further comprising determining an extent of a reflection lobe.

7. The method of any of the preceding claims, further comprising counting a number of voxels within a given threshold range, preferably further comprising determining and outputting a density score of a window's center voxel.

8. The method of any of the preceding claims, further comprising filtering one or more features based on one or more of a score and a range of scores.

9. The method of any of the preceding claims, further comprising:

scoring the local significance of data trends in the seismic data volume; and/or
counting a number of voxels within a given threshold range; and/or
saving and outputting a density score volume including a volumetric confidence estimate.

10. A system for processing seismic data comprising:

an I/O interface adapted to receive a seismic data volume; and
a voxel suppression module adapted to emphasize high amplitude events using voxel suppression.

11. The system according to claim 10, wherein the system further comprises:

a voxel density module adapted to score the local significance of data trends in the seismic data volume; and/or
a voxel connectivity module adapted to determine, with the assistance of a processor, a voxel connectivity score for constituent members of one or more connected features in the data volume; and/or
a reflection collapse module adapted to collapse reflections within the data volume to reduce seismic reflections.

12. The system according to claim 10 or 11, further comprising means for emphasizing high amplitude events using voxel suppression; and/or
sorting a portion of voxels by absolute value.

13. The system according to any of claims 10 to 12, further comprising means for preserving a percentage of the portion of voxels above a certain value.

14. The system according to any of claims 10 to 13, further comprising means for rescaling to emphasize voxels at a center of an operator.

15. Computer-readable storage medium, wherein the method according to any of claims 1 to 9 is implemented in software and stored on the computer-readable storage medium.

Input Volume

Voxel
Connectivity
Module          110

Voxel
Suppression
Module          160

100

Reflection
Collapser
Module          120

Voxel Density
Module          170

Running
Window Module

Controller       130

Storage          140

Memory          180

Computer-
Readable
Storage
Media           150

I/O
Interface        190

300

Display/
Output
Device

Prepared Data

Seismic
Interpretation
System

200

Interpretation of:
Salt Bodies
Canyons
Channels
Horizons
Surface Draping

Fig. 1

BEGIN — S200

S210
Input Seismic Data Volume

S220
Map Connected Non-null Voxels

S230
Determine Connectivity Score { Determine Number of Constituent Voxels

S240
Optionally Filter Features based on (e.g., more or less than) Selected Connectivity Score

S250
Optionally Filter Features within Connectivity Range

S260
Output Visual-Clutter Reduced Seismic Data Volume

S270
END

Fig. 2

BEGIN ~ S300    S310

Input Seismic Data Volume

S320

Optionally Regularize Amplitude of all Reflection Lobes Present

S330

For Each Operator Position

S332

Determine if Operator's Center Voxel has Highest Absolute Amplitude of all Voxels within Operator

S334

If Highest Absolute Amplitude Voxel is not in the Center of the Operator – Move to Next Voxel

S336

If Highest Absolute Amplitude Voxel is at the Center of the Operator – Write the Voxel Value to Output Volume in its Original Position

S337

Search Upward and Downward from Center Voxel to Determine Full Extent of Main Reflaction Lobe

S338

Save Full Extent of Main Reflection Lobe to Output

S340

END

Fig. 3

BEGIN — S400

For Each Operator Position, Sort all Voxels by Absolute Value — S410

Preserve in Original Position Percentage above User-specified Value — S420

S430 — Optionally Rescale to Regularize

$RF = Whole\ volume\ Std.\ Dev./\ Operator\ Std.\ Dev$

Rescale to Emphasize voxels in center of operator — S440

Output Visually Improved Volume — S450

S460 — END

Fig. 4

BEGIN — S500

For Each position of a running window, Count Number of Voxels within a given threshold range — S510

S520

Output Density Score of Window's Center Voxel

Higher Density = Voxels of High Confidence
Lower Density =Voxels of lower Confidence

Determine Density Score for every Operator Position — S522

If center voxel falls within specified threshold range calculate density score — S524

Output Density Score Volume (e.g., volumetric confidence estimate) — S530

S540

END

Fig. 5

Fig. 6

a

b

c

Fig. 7

Fig. 8

Fig. 9

Fig. 10

Fig. 11

| 0 | 0.12 | 0.17 | 0.12 | 0 |
|------|------|------|------|------|
| 0.30 | 0.45 | 0.49 | 0.45 | 0.30 |
| 0.55 | 0.71 | 0.76 | 0.71 | 0.55 |
| 0.71 | 0.88 | 0.94 | 0.88 | 0.71 |
| 0.76 | 0.94 | 1 | 0.94 | 0.76 |
| 0.71 | 0.88 | 0.94 | 0.88 | 0.71 |
| 0.55 | 0.71 | 0.76 | 0.71 | 0.55 |
| 0.30 | 0.45 | 0.49 | 0.45 | 0.30 |
| 0 | 0.12 | 0.17 | 0.12 | 0 |

Fig. 12

a

b

Fig. 13

a

b

Fig. 14

a

b

Fig. 15

| | | | | | | | | | |
|---|---|---|---|---|---|---|---|---|---|
| 2 | 3 | 9 | 8 | 1 | 5 | 1 | 8 | 2 | 3 |
| 4 | 1 | 7 | 7 | 4 | 2 | 5 | 5 | 1 | 4 |
| 5 | 3 | 2 | 9 | 6 | 1 | 4 | 9 | 2 | 5 |
| 2 | 1 | 4 | 7 | 8 | 3 | 8 | 1 | 3 | 6 |
| 8 | 1 | 3 | 9 | 5 | 2 | 4 | 5 | 2 | 3 |
| 4 | 2 | 5 | 8 | 7 | 1 | 6 | 4 | 6 | 6 |
| 1 | 7 | 3 | 1 | 9 | 5 | 3 | 5 | 4 | 4 |
| 5 | 1 | 7 | 4 | 7 | 9 | 2 | 1 | 7 | 1 |
| 9 | 6 | 3 | 2 | 3 | 8 | 3 | 9 | 2 | 3 |
| 4 | 5 | 2 | 1 | 5 | 9 | 7 | 4 | 1 | 8 |

a

| | | | | | | | | | |
|---|---|---|---|---|---|---|---|---|---|
| 0 | 3 | 6 | 6 | 3 | 0 | 1.5 | 1.5 | 1.5 | 0 |
| 0 | 2 | 5 | 6 | 4 | 1 | 2 | 2 | 2 | 0 |
| 0 | 1 | 4 | 6 | 5 | 3 | 2 | 2 | 2 | 1.5 |
| 1.5 | 1 | 3 | 5 | 5 | 3 | 2 | 2 | 2 | 1.5 |
| 1.5 | 1 | 3 | 5 | 5 | 4 | 2 | 3 | 3 | 4.5 |
| 3 | 2 | 3 | 4 | 4 | 3 | 1 | 2 | 2 | 3 |
| 1.5 | 2 | 3 | 5 | 5 | 5 | 2 | 3 | 3 | 4.5 |
| 4.5 | 4 | 3 | 3 | 4 | 4 | 3 | 2 | 2 | 1.5 |
| 3 | 3 | 2 | 2 | 4 | 5 | 5 | 3 | 3 | 3 |
| 4.5 | 3 | 1.5 | 0 | 3 | 4.5 | 6 | 3 | 3 | 2.25 |

b

| | | | | | | | | | |
|---|---|---|---|---|---|---|---|---|---|
| 0 | 0 | 6 | 6 | 0 | 0 | 0 | 0 | 0 | 0 |
| 0 | 0 | 5 | 6 | 4 | 0 | 0 | 0 | 0 | 0 |
| 0 | 0 | 4 | 6 | 5 | 0 | 0 | 0 | 0 | 0 |
| 0 | 0 | 0 | 5 | 5 | 0 | 0 | 0 | 0 | 0 |
| 0 | 0 | 0 | 5 | 5 | 4 | 0 | 0 | 0 | 4.5 |
| 0 | 0 | 0 | 4 | 4 | 0 | 0 | 0 | 0 | 0 |
| 0 | 0 | 0 | 5 | 5 | 5 | 0 | 0 | 0 | 4.5 |
| 4.5 | 4 | 0 | 0 | 4 | 4 | 0 | 0 | 0 | 0 |
| 0 | 0 | 0 | 0 | 4 | 5 | 5 | 0 | 0 | 0 |
| 4.5 | 0 | 0 | 0 | 0 | 4.5 | 6 | 0 | 0 | 0 |

c

Fig. 16

31

| 0 | 0 | 6 | 6 | 0 | 0 | 0 | 1.5 | 0 | 0 |
|---|---|---|---|---|---|---|-----|---|---|
| 0 | 0 | 5 | 6 | 0 | 0 | 0 | 0 | 0 | 0 |
| 0 | 0 | 0 | 6 | 5 | 0 | 0 | 2 | 0 | 0 |
| 0 | 0 | 0 | 5 | 5 | 0 | 2 | 0 | 0 | 1.5 |
| 1.5 | 0 | 0 | 5 | 0 | 0 | 0 | 0 | 0 | 0 |
| 0 | 0 | 0 | 4 | 4 | 0 | 1 | 0 | 2 | 3 |
| 0 | 2 | 0 | 0 | 5 | 0 | 0 | 0 | 0 | 0 |
| 0 | 0 | 3 | 0 | 4 | 4 | 0 | 0 | 2 | 0 |
| 3 | 3 | 0 | 0 | 0 | 5 | 0 | 3 | 0 | 0 |
| 0 | 0 | 0 | 0 | 0 | 4.5 | 6 | 0 | 0 | 2.25 |

a

| 0 | 0 | 6 | 6 | 0 | 0 | 0 | 0 | 0 | 0 |
|---|---|---|---|---|---|---|---|---|---|
| 0 | 0 | 5 | 6 | 0 | 0 | 0 | 0 | 0 | 0 |
| 0 | 0 | 0 | 6 | 5 | 0 | 0 | 0 | 0 | 0 |
| 0 | 0 | 0 | 5 | 5 | 0 | 0 | 0 | 0 | 0 |
| 0 | 0 | 0 | 5 | 0 | 0 | 0 | 0 | 0 | 0 |
| 0 | 0 | 0 | 4 | 4 | 0 | 0 | 0 | 0 | 0 |
| 0 | 0 | 0 | 0 | 5 | 0 | 0 | 0 | 0 | 0 |
| 0 | 0 | 0 | 0 | 4 | 4 | 0 | 0 | 0 | 0 |
| 0 | 0 | 0 | 0 | 0 | 5 | 0 | 0 | 0 | 0 |
| 0 | 0 | 0 | 0 | 0 | 4.5 | 6 | 0 | 0 | 0 |

b

Fig. 17

Fig. 18

Fig. 19

Fig. 20

Fig. 21

| 0 | 2.25 | 9 | 8.4 | 0.75 | 0 | 0.38 | 3 | 0.75 | 0 |
|---|---|---|---|---|---|---|---|---|---|
| 0 | 0.5 | 7.4 | 7.8 | 4 | 0.5 | 2.5 | 2.5 | 0.5 | 0 |
| 0 | 0.75 | 2 | 9 | 6.6 | 0.75 | 2 | 4.5 | 1 | 1.88 |
| 0.75 | 0.25 | 3 | 7.4 | 8.2 | 2.25 | 4 | 0.5 | 1.5 | 2.25 |
| 3 | 0.25 | 2.25 | 9 | 5.8 | 2 | 2 | 3.75 | 1.5 | 3.6 |
| 3 | 1 | 3.75 | 8 | 7 | 0.75 | 1.5 | 2 | 3 | 4.5 |
| 0.38 | 3.5 | 2.25 | 2.6 | 9 | 5.8 | 1.5 | 3.75 | 3 | 4.5 |
| 5.4 | 1 | 5.25 | 3 | 7 | 9 | 1.5 | 0.5 | 3.5 | 0.38 |
| 6.75 | 4.5 | 1.5 | 1 | 3 | 8.2 | 4.2 | 6.75 | 1.5 | 2.25 |
| 4.5 | 3.75 | 0.75 | 0 | 3.75 | 9 | 7.8 | 3 | 0.75 | 4.5 |

a

Raw Data Histogram

b

Contrast Enhanced Data Histogram

Fig. 22

Fig. 23

Fig. 24

Fig. 25

Fig. 26

Fig. 27

Fig. 28

a

b

c

Fig. 29

Fig. 30

**EP 2 624 014 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 98790607 P
- US 2007071733 W

- WO 2008005690 A